# EUROPÄISCHE PATENTANMELDUNG

(11) **EP 2 511 331 A1**
(43) Veröffentlichungstag der Anmeldung: **17.10.2012**
(21) Anmeldenummer: 11161981.3
(22) Anmeldetag: 12.04.2011
(51) Int. Cl.: C08K 3/32

(54) **Peroxidarmes Polymer enthaltend Phosphorverbindung**

(71) Anmelder: BASF SE, 67056 Ludwigshafen (DE)
(72) Erfinder: Die Erfindernennung liegt noch nicht vor

(57) **Zusammenfassung**

Oxidationsempfindliches, peroxidarmes, in einer abgeschlossenen, Schutzgas-gefüllten Verpackungsform befindliches Polymer, enthaltend pro Kilogramm Polymerfeststoff mindestens eine anorganische Phosphorverbindung in solchen Mengen, dass der Gesamtphosphorgehalt 2*10⁻⁵ bis 0,02 mol beträgt, sowie Verfahren zur Stabilisierung von oxidationsempfindlichem Polymer gegen Peroxidbildung, dadurch gekennzeichnet, dass während oder nach der Polymerisation wenigstens eine anorganische Phosphorverbindung in solchen Mengen in einer oder mehreren Portionen zugegeben wird, dass der Gesamtphosphorgehalt pro Kilogramm Polymerfestgehalt des fertigen Polymers 2*10⁻⁵ bis 0,02 mol beträgt, und das solchermaßen behandelte Polymer in eine Schutzgasgefüllte, abgeschlossene Verpackungsform gegeben wird, sowie Verwendung dieser Polymere.

## Beschreibung

Die vorliegende Erfindung betrifft oxidationsempfindliches, peroxidarmes Polymer, enthaltend mindestens eine anorganische Phosphorverbindung, ein Verfahren zur Stabilisierung eines solchen Polymers und dessen Verwendung.

Viele oxidationsempfindliche Polymere wie vernetzte und unvernetzte Homo- und Copolymere des N-Vinylpyrrolidons werden üblicherweise nach ihrer Polymerisation durch Sprühtrocknung oder Walzentrocknung oder einer anderen Warmlufttrocknung in rieselfähige Pulver überführt. Bei diesen Prozessen bilden sich durch den intensiven Luftkontakt und die Wärme Spuren von Peroxiden, deren Gehalt im Laufe der darauffolgenden Verpackung, Lagerung und Handhabung noch weiter zunimmt. Diese Neigung zur Peroxidbildung kann bei der Verwendung von Polymeren wie Polyvinylpyrrolidon (PVP und PVPP) in pharmazeutischen Zubereitungen Probleme bereiten. In den gültigen Pharmakopöen, z.B. Ph. Eur. 7, ist der Peroxidgehalt für diese Polymere auf maximal 400 ppm limitiert. Durch Trocknung unter Luftausschluss, Lagerung bei tiefen Temperaturen und/oder die hermetisch dichte Verpackung unter Vakuum oder einem Inertgas kann zwar die Kinetik der Peroxidbildung verlangsamt, nicht aber verhindert werden. Ferner sind diese Verfahren mit einem sehr hohen Aufwand verbunden, so dass die Akzeptanz derartiger Maßnahmen durch die Verwender gering ist.

Darüber hinaus besteht der Wunsch der Pharmahersteller, Polymere mit noch geringeren Peroxidmengen zu erhalten, etwa nicht mehr als 100 oder gar nicht mehr als 50 ppm, wobei diese Werte dann auch noch bei einer möglichst langen Lagerdauer sicher unterschritten werden sollen.

Bühler schreibt in seinem Buch "Polyvinylpyrrolidone - Excipients for Pharmaceuticals", Springer, 2005, Seiten 33 und 34, dass alle Typen von Povidonen und Crospovidonen ("Povidon" ist der generische Name für lösliches Polyvinylpyrrolidon (PVP) im Bereich Pharma; "Crospovidon" der generische Name für wasserunlöslich vernetztes PVP, das auch als PVPP und Polyvinylpyrrolidon-Popcorn-Polymer bezeichnet) einen messbaren Zuwachs des Peroxidgehalts bei Lagerung in Gegenwart von Luftsauerstoff aufweisen. Dieser Zuwachs sei besonders stark für das Povidon mit K-Wert 90. Deshalb sei es ratsam, Produkte dieser K-Werte bei niedrigen Temperaturen und/oder hermetisch eingeschweißt in Aluminium-Polyethylen Zweifachschicht-Foliensäcken unter Stickstoffatmosphäre zu lagern. Dennoch kann dadurch laut Bühler der weitere Anstieg der Peroxidgehalte nur verlangsamt aber nicht gestoppt werden.

Solche Aluminium-Polyethylen-Zweischicht-Foliensäcke sind zudem sehr teuer, und die Aluminium-Schicht kann leicht beschädigt werden, wodurch sie den Schutzeffekt gegenüber Eindringen von Sauerstoff weitgehend verliert.

Bühler berichtet ebenso über die Farbveränderung bei wässrigen Lösungen von PVP insbesondere nach Lagerung oder Erwärmen, etwa bei der Sterilisierung: Die entstehende gelbe bis braungelbe Färbung resultiere aus der Oxidation mittels Luftsauerstoff. Dies kann laut Bühler durch Zusatz von geeigneten Antioxidantien zum Polymer (nach dessen Polymerisation) vermieden werden.

Nachteilig am Zusatz solcher Antioxidantien ist jedoch, dass die schon aus der Polymerisation stammenden sowie direkt danach entstehenden Peroxide eine größere Menge der Antioxidantien bereits bei Zugabe zum Polymer aufbrauchen und so den Schutz und die Dauer der Lagerzeit verringern. Zur Kompensation müssten daher größere Mengen an Antioxidans eingesetzt werden.

Die Oxidationsempfindlichkeit von Polymeren wie PVP, die makroskopisch sicht- und messbaren Auswirkungen der Oxidation sowie vorgeschlagene Massnahmen zur Eindämmung und Hemmung der Oxidation ist in vielen Veröffentlichungen beschrieben worden (siehe beispielsweise Bühler in oben aufgeführter Veröffentlichung; Kline in Modern Plastics, 1945, November, ab Seite 157; EP-B 873 130).

Aus der US 6,331,333 ist bekannt, dass Polyvinylpyrrolidone zur Verhinderung der PeroxidBildung bei Lagerung in sauerstoffundurchlässigen Verpackungen in Gegenwart eines Sauerstofffängers gelagert werden. Als Sauerstofffänger werden Ascorbinsäure, Eisenpulver oder Eisensalze verwendet. Sauerstofffänger und Polyvinylpyrrolidon sind dabei räumlich getrennt.

Aus der US 6,498,231 ist bekannt, dass Polyvinylpyrrolidone zur Stabilisierung bei Lagerung mit einem Antioxidans vermischt und unter einer Atmosphäre, die nicht mehr als 50.000 ppm Sauerstoff enthält, gelagert werden. Als Antioxidantien werden beispielsweise phenolische oder bisphenolische Verbindungen, vorzugsweise Thioamid- oder Thioharnstoff-Derivate eingesetzt. Solche Antioxidantien sind aber physiologisch nicht ganz unbedenklich und für die Verwendung der Polymere in pharmazeutischen Zubereitungen gänzlich ungeeignet.

Aus der EP 1263813 B1 ist ein Verfahren zur Popcornpolymerisation unter Einstellung der Teilchengröße der Popcornpolymere mittels Durchleiten eines Inertgasstroms und/oder Zusatz von Reduktionsmittel bekannt. Dabei kann optional ein Reduktionsmittel zugesetzt werden in Mengen von 0,1 bis 1 Gewichtsprozent bezogen auf die Monomermischung zur Erreichung der völligen Sauerstofffreiheit im Reaktionsgemisch. Beschrieben werden als Reduktionsmittel Natriumsulfit, Natriumpyrosulfit, Natriumdithionit, Ascorbinsäure oder Mischungen der Reduktionsmittel. In den Beispielen eingesetzt wurde Natriumdithionit in einer Mengen von 2,2*(10 hoch -7) bis 1,9 Gewichtsprozent bezogen auf die Monomermischung.

Eine Reduktion des Peroxidgehaltes oder eine Stabilisierung gegen Peroxidaufbau wird weder als Ziel genannt noch ansonsten als solche in der gesamten Schrift erwähnt.

Aus US 2821519 ist ein Verfahren zur Stabilisierung von PVP bekannt mittels Zusatz von Hydrazin und dessen Derivaten.

Hydrazine sind jedoch toxikologisch bedenklich und in N-Vinylpyrrolidon-Homo- und Copolymeren und Polymeren von N-Vinylpyrrolidon-Derivaten unerwünscht.

In der EP-B 1 083 884 ist ein Verfahren zur Stabilisierung von Polyvinylpyrrolidonen gegen Peroxid-Bildung beschrieben, bei dem wässrige Lösungen der Polymeren mit sehr geringen Mengen von Schwermetallsalzen oder mit Peroxid-spaltenden Enzymen versetzt werden. Diese verbleiben im Produkt. Geeignete Schwermetalle sind Mangan, Zink, Kobalt und insbesondere Kupfer.

Der Einsatz der vorgeschlagenen Schwermetalle ist jedoch wegen möglicher Akkumulierung im Körper von Nachteil. Der Einsatz von Enzymen ist vor allem aus Kosten- und Stabilitätsgründen nachteilig.

Aus der GB 836,831 ist ein Verfahren zur Stabilisierung von Polyvinylpyrrolidonen gegen Verfärbungen bekannt, bei dem Lösungen der Polymeren mit Schwefeldioxid, schwefliger Säure oder Alkalimetallsulfiten behandelt werden.

Aus der DE-A 10 2005 005 974 ist bekannt, dass bei dem aus GB 836,831 bekannten Verfahren der Peroxid-Aufbau nach Lagerung sogar in stärkerem Maße auftritt als bei unbehandelten Polymeren. DE-A 10 2005 005 974 offenbart daher ein Verfahren, wobei die Polyvinylpyrrolidone zunächst mit Schwefeldioxid, schwefliger Säure oder deren Alkalimetallsalzen und anschließend mit einem Radikalfänger behandelt werden.

Allerdings führt dieses Verfahren nicht bei allen Polymeren zu den gewünschten dauerhaften Effekten. Beispielsweise sind Farbe und Geruch und Peroxidgehalt nicht immer dauerhaft befriedigend.

Aus WO 2010/072640 bekannt ist ein Verfahren zur Herstellung von peroxidarmem Polymer umfassend das Behandeln des Polymeren mit elementarem Metall in Gegenwart einer Flüssigkeit sowie ein Polymer erhältlich nach dem erfindungsgemäßen Verfahren mit einem Peroxid-Gehalt von weniger als 20 ppm bezogen auf den Polymerfestgehalt, wobei der Peroxid-Gehalt zwei Tage nach der Behandlung ermittelt wird mittels der Titanylsulfat-Methode gemäß europäischer Pharmacopöe Ausgabe 7, und das Polymer nicht mehr als 5 ppm bezogen auf den Polymerfestgehalt je edlem Metall und nicht mehr als 1000 ppm bezogen auf den Polymerfestgehalt je unedlem Metall aufweist.

Eingesetzt werden Alkalimetalle, die sich unter Wasserstoffbildung in der Polymerlösung oder Suspension auflösen oder Edelmetalle und gasförmiger Wasserstoff, der über diese Edelmetalle geleitet wird. Der Wasserstoff soll dabei die Peroxide reduzieren.

Die Verwendung von gasförmigen Wasserstoff und/oder mit Wasser reaktive, Wasserstoffbildende Metalle, ist im großtechnischen Betrieb ein nicht zu unterschätzendes Sicherheitsrisiko und bedeutet daher höhere Kosten.

Antioxidantien sind dem Fachmann in allen Bereichen der Polymerchemie hinlänglich bekannt. Üblicherweise werden Antioxidantien zu oxidationsempfindlichen Stoffen zugesetzt, um diese vor einer weiteren Oxidation etwa durch Luftsauerstoff zu schützen (siehe etwa R.E.King III. "Antioxidants (Overview)" and S. Al-Malaika "Antioxidants and Stabilizers" in Polymeric Materials Encyclopedia, Volume 1, Edt. J.C. Salamone, 1996).

Ein solches Vorgehen ist beispielsweise in der DE10019470 beschrieben für die Stabilisierung von Polyvinylpyrrolidonen. Dabei werden Antioxidantien nach der Polymerisation oder einer der Polymerisation nachfolgenden Nachbehandlung und vor gegebenenfalls einer Trocknung zu Polymerpulvern zugegeben und eingemischt. Die dafür benötigten Mengen werden angegeben zu 0,00001 bis 30 Gewichtsprozent bezogen auf den Polymerfestgehalt. Konkret genannte Einsatzmengen in den Beispielen sind 0,1 Gew.% Hydrochinon sowie 0,5 und 1 Gewichtsprozent eines anderen Antioxidans jeweils bezogen auf den Polymerfestgehalt.

Nachteilig an den genannten und konkret verwendeten Substanzen aus der DE10019470 ist, dass die meisten entweder nicht pharmatauglich oder nur sehr eingeschränkt pharmatauglich sind. Darüber hinaus verursachen Etliche Geruch nach Schwefel oder reagieren gar mit üblichen Arzneiwirkstoffen.

Ebenso erreichen diese Substanzen keine ausreichende Absenkung des Peroxidgehaltes. Insbesondere ist keine oder eine nur ungenügende Absenkung der Peroxidwerte bei vernetzten, wasserunlöslichen Polymeren erreichbar. Anorganische Phosphorverbindungen sind nicht genannt.

US 7786233 B2 offenbart die Zugabe von Antioxidans bereits vor, während oder nach der Polymerisation. Allerdings führt die Schrift das Vorgehen zu "vor" und "während" mit keinem weiteren Wort aus und offenbart auch keine Beispiele dazu. Die eingesetzten Phosphor-haltigen Substanzen sind ausnahmslos organische Phosphorverbindungen, die dem Fachmann als tyische Antioxidantien bekannt sind.

Eine weitere Möglichkeit, die Autoxidation von oxidationsempfindlichen Polymeren zu unterbinden, ist, die Polymere nach Aufarbeitung in einer sauerstoffundurchlässigen Verpackung aufzubewahren.

In der EP-B 873 130 wird empfohlen, Polyvinylpyrrolidone zur Verhinderung der PeroxidBildung unter einer Stickstoffatmosphäre sprühzutrocknen und in luftdichten Behältern aufzubewahren.

Als Verpackungsmaterial für oxidationsempfindliche Stoffe werden auch Verbundfolien aus Polyethylen und Aluminium verwendet. Solche Folien haben zwar grundsätzlich gute Barriereeigenschaften, weil sie im Wesentlichen sauerstoffundurchlässig sind, weisen aber den Nachteil auf, dass bei der Handhabung eine mechanische Verletzung der Barriereschicht praktisch nicht zu vermeiden ist, wodurch die Barriereeigenschaft stark beeinträchtigt werden kann. Schon Mikrorisse genügen, um die Sauerstoffundurchlässigkeit der Folien zu beeinträchtigen.

Aus der JP-A 09-226070, der JP-A 2000-44756, der JP-A 09-216653 oder der JP-A 2002-3609 sind Verbundfolien mit Polyvinylalkohol-Schichten und deren Verwendung zur sauerstoffundurchlässigen Verpackung von Lebensmitteln, Kosmetika, Waschmitteln, Chemikalien oder Treibstoff bekannt.

Aus der WO 2006/015765 sind schlauchförmige mehrschichtige thermoplastische Verbundfolien für die Verpackung von Nahrungsmitteln bekannt.

Aus der WO 2010052088 sind Verpackungsformen aus Mehrschichtfolien, die Verpackung von peroxidarmem Polymer sowie Verfahren zur Verpackung bekannt.

Aufgabe der vorliegenden Erfindung war es, ein oxidationsempfindliches, peroxidarmes Polymer dauerhaft gegen die Peroxidbildung zu stabilisieren, ohne es mit organischen Verbindungen wie Antioxidantien, Enzymen oder mit Metallen sowie ohne das Polymer mit Geruchs- und Farbe-bildenden Substanzen wie Schwefel- und Stickstoffverbindungen zu verunreinigen. Das Polymer sollte dabei sehr niedrige bis nicht nachweisbare Peroxidgehalte und gleichzeitig eine erhöhte Stabilität gegen die Oxidation und erneute Peroxidbildung aufweisen. Ebenso sollte es ausreichend Schutz vor Peroxidbildung bieten selbst bei der kurzzeitigen Handhabung an Luft wie etwa der Entnahme des Polymers aus der Verpackung.

Ein weiteres Ziel war, dass die erhaltenen Polymere geeignet sein sollten für den Kontakt mit dem menschlichen und/oder tierischen Körper sowie dessen Flüssigkeiten. Insbesondere sollten die erhaltenen Polymere möglichst uneingeschränkt pharmatauglich sein einschließlich oraler oder intravenöser Aufnahme in den menschlichen und/oder tierischen Körper. Ebenso sollte der Kontakt mit Lebensmitteln oder Pflanzen, die zur Ernährung dienen oder direkt oder in verarbeiteter Form mit Tieren und/oder dem Menschen in Kontakt kommen, beispielsweise als Lebens- oder Futtermittel, uneingeschränkt möglich sein.

Demgemäß wurde ein oxidationsempfindliches, peroxidarmes, in einer abgeschlossenen, Schutzgas-gefüllten Verpackungsform befindliches Polymer, enthaltend pro Kilogramm Polymerfeststoff mindestens eine anorganische Phosphorverbindung in solchen Mengen, dass der Gesamtphosphorgehalt 2*10⁻⁵ bis 0,02 mol beträgt, gefunden.

Ebenso gefunden wurde ein Verfahren zur Stabilisierung von oxidationsempfindlichem Polymer gegen Peroxidbildung, dadurch gekennzeichnet, dass während oder nach der Polymerisation wenigstens eine anorganische Phosphorverbindung in solchen Mengen in einer oder mehreren Portionen zugegeben wird, dass der Gesamtphosphorgehalt pro Kilogramm Polymerfestgehalt des fertigen Polymers 2*10⁻⁵ bis 0,02 mol beträgt, und das solchermaßen behandelte Polymer in eine Schutzgasgefüllte, abgeschlossene Verpackungsform gegeben wird.

Weiterhin gefunden wurde die Verwendung von erfindungsgemäßem Polymer in kosmetischen oder pharmazeutischen Zubereitungen, Zubereitungen von Agrowirkstoffen, Zubereitungen im Bereich Nahrungsmittel, Tiernahrungsmittel, Nahrungsmittelergänzung oder Tiernahrungsmittelergänzung sowie für medizintechnische Anwendungen.

"Anorganische Phosphorverbindung" (Im Rahmen dieser Erfindung auch verkürzt und gleichbedeutend als "Phosphorverbindung" bezeichnet) bedeutet im Rahmen dieser Erfindung mindestens eine Sauerstoffsäure des Phosphors mit Phosphor der Oxidationsstufen +1, +2, +3, +4 oder gemischten Oxidationsstufen, sowie deren Salze. Möglich und von der Erfindung umfasst sind demnach die Verwendung einzelner Säuren, einzelner Salze oder Mischungen mehrerer verschiedener Säuren und/oder Salze.

"Sauerstoffsäuren des Phosphors mit Phosphor der Oxidationsstufen +1, +2, +3, +4 oder gemischten Oxidationsstufen" sind die dem Fachmann bekannten Substanzen dieser Klasse. Dies sind beispielsweise Säuren und Salze der Ortho- und Disäuren, Metasäuren und Polysäuren des Phosphors mit Phosphor der Oxidationsstufen +1 bis +4, wobei die Phosphoratome in mehrkernigen Säuren/Salzen auch verschiedene Oxidationsstufen ("gemischte" Oxidationsstufen) aufweisen können.

Beispiele solcher Substanzen sind Phosphinsäure (Oxidationsstufe des Phosphors: +1), Phosphinate (+1) (veraltete Bezeichnung: "Hypophosphite"), Hypodiphosponsäure (+2), Hypodiphosphinate (+2), Phosphonsäure (+3), Phosphonate (+3) (veralte Bezeichnung: Phosphite), Diphosphonsäure (+3), Diphosphonate (+3), Hypodiphosphorsäure (+4), Hypodiphosphate (+4). Weiterhin sind dies die oligomeren Derivate (Polyphosphorsäuren) all dieser Säuren und Salze in Ringform ("Metasäuren") oder Kettenform sowie gemischte Säuren wie die Diphosphor-(II,IV)-säure und die Diphosphor-(III,V)-säure sowie die Salze aller vorgenannten Substanzen.

Bevorzugt im Rahmen dieser Erfindung wird als Phosphorverbindung eine oder mehrere Substanzen ausgewählt aus Phosphinsäure (Oxidationsstufe des Phosphors: +1), Phosphinat (+1), Hypodiphosponsäure (+2), Hypodiphosphinat (+2), Phosphonsäure (+3), Phosphonat (+3), Diphosphonsäure (+3) und Diphosphonat (+3) sowie deren Salzen.

Besonders bevorzugt im Rahmen dieser Erfindung wird als "Phosphorverbindung" eine oder mehrere Substanzen ausgewählt aus Phosphinsäure (Oxidationsstufe des Phosphors: +1), Phosphinat (+1), Phosphonsäure (+3), Phosphonat (+3), Diphosphonsäure (+3) und Diphosphonat (+3) sowie deren Salzen.

Ganz besonders bevorzugt wird als Phosphorverbindung eine oder mehrere Substanzen ausgewählt aus Phosphinat (Oxidationsstufe des Phosphors: +1), Phosphonat (+3) und Diphosphonat (+3).

"Salze" der Sauerstoffsäuren des Phosphors sind Ammoniumsalze sowie alle Metallsalze von Metallen, die pharmakologisch unbedenklich sind für Mensch und/oder Tier. Die Grenze für die "pharmakologische Unbedenklichkeit" gibt demnach die Maximalmenge an Metall vor, die im Polymer vorhanden sein darf. Die zulässige Metallmenge im Polymer ergibt sich somit aus der zulässigen Tagesdosis für dieses Metall und der zulässigen Tagesdosis an Polymer. Die zulässige Metallmenge ergibt sich demnach aus der zulässigen Polymermenge pro Tag und kg Körpergewicht Mensch oder Tier (je nach beabsichtigter Anwendung und möglicher Aufnahmewege in den Körper): Sind beispielsweise 1 g Polymer fest und 1 mg Zink jeweils pro Tag zulässig und sollen diese Maximalwerte beide gleichzeitig ausgenutzt werden, so kann die Maximalmenge an Zink im Polymer maximal einen Wert von 0,1 Prozent bzw. 100 ppm Zink bezogen

auf Polymerfestgehalt betragen. Sollte demnach eine Menge an Metallsalz zum Polymer zugesetzt werden, um eine gewünschte Stabilisierung insbesondere des Peroxidgehalts zu erreichen, dabei jedoch die Maximalmenge für dieses Metall erreicht oder gar überschritten werden, so kann der Fachmann ohne weiteres Mischungen verschiedener Metallsalze einsetzen, um diese Maximalmengen je Metall sicher zu unterschreiten.

Bevorzugte Salze sind demnach eines oder mehrere pharmakologisch unbedenkliche Metalle ausgewählt aus Lithium, Natrium, Kalium, Magnesium, Calcium, Zink und Eisen sowie Ammonium.

Besonders bevorzugt sind Natrium, Kalium, Magnesium und/oder Calcium. Ganz besonders bevorzugt ist Natrium und/oder Kalium. Insbesondere bevorzugt ist Natrium.

Die erfindungsgemäßen Polymere enthalten die Phosphorverbindung in solchen Mengen, dass der Gesamtphosphorgehalt pro Kilogramm Polymerfeststoff 2*10⁻⁵ (entsprechend "0,00002") bis 0,02 mol beträgt.

Eingesetzt zum erfindungsgemäßen Verfahren zur Stabilisierung der erfindungsgemäßen Polymere wird die Phosphorverbindung in solchen Mengen in einer oder mehreren Portionen, dass der Gesamtphosphorgehalt pro Kilogramm Polymerfestgehalt des fertigen Polymers 2*10⁻⁵ bis 0,02 mol beträgt.

Bevorzugt enthalten die Polymere je Kilogramm Polymerfestgehalt des fertigen Polymers 0,0005 bis 0,01 mol, besonders bevorzugt 0,001 bis 0,005 mol und ganz besonders bevorzugt von 0,0015 bis 0,004 mol Gesamtphosphorgehalt.

"Gesamtphoshorgehalt" bezeichnet den Anteil an Phosphor, berechnet als elementarer Phosphor, im fertigen Polymerfeststoff. Wird demnach eine anorganische Phosphorverbindung eingesetzt, die je Molekül ein Phosphoratom enthält, entspricht die Molmenge an Phosphor, berechnet als elementarer Phosphor, demnach der Molmenge dieses Moleküls, etwa Phosphinsäure.

Da der Phosphorgehalt sich ohne äußere Einflüsse auch bei Polymernachbehandlungen, beim Trocknen des Polymers, beim Lagern und Handhaben nicht ändert, verbleibt demnach alles Phosphor, zugegeben als anorganische Phosphorverbindung, im Polymer.

Als "anorganische Phosphorverbindung" wird demnach nicht eine Phosphorverbindung der Oxidationsstufe +5 zugegeben.

Sollte beispielsweise zur pH-Wert-Veränderung eine Phosphorverbindung der Oxidationsstufe +5, etwa Phosphorsäure oder ihr Salz Phosphat, zu dem Polymer zugegeben werden, so ist der Anteil an Phosphor resultierend aus dieser Zugabe nicht Teil des erfindungsgemäß definierten "Gesamtphosphorgehalts".

Um Lagerstabilitäten angeben zu können, muss ein Referenzzeitpunkt angegeben werden. Da Die Herstellung von Polymeren und deren Verpackung in die Verkaufsgebinde üblicherweise nicht mehr als 48 Stunden auseinander liegen, wird der Zeitpunkt von 48 Stunden nach Beendigung der Polymerisation im Rahmen dieser Erfindung als "Herstellung" bezeichnet.

Ein erfindungsgemäßes Polymer weist einen Peroxidgehalt bestimmt zum Zeitpunkt der Herstellung von nicht mehr als 50 ppm, bevorzugt nicht mehr als 20 ppm und besonders bevorzugt von nicht mehr als 10 ppm wie beispielsweise weniger als 5 ppm oder weniger als 1 ppm Peroxide und/oder einen Peroxid-Gehalt bestimmt zu einem beliebigen Zeitpunkt innerhalb von bis zu drei Monaten nach Herstellung von nicht mehr als 100 ppm, bevorzugt nicht mehr als 50 ppm, besonders bevorzugt nicht mehr als 20 ppm und ganz besonders bevorzugt nicht mehr als 10 ppm wie beispielsweise nicht mehr als 5 ppm oder gar nicht mehr als 1 ppm auf.

Ferner weist das erfindungsgemäße Polymer Restmonomergehalte je eingesetztem Monomer von nicht mehr als 100 ppm, bevorzugt nicht mehr als 50 ppm, besonders bevorzugt nicht mehr als 20 ppm, ganz besonders bevorzugt nicht mehr als 10 ppm und insbesondere nicht mehr als 5 ppm wie beispielsweise weniger als 1 ppm auf.

Die Ermittlung des Peroxid-Gehalts erfolgt dabei mittels der Titanylsulfat-Methode gemäß europäischer Pharmacopöe Ausgabe 7. Die Bestimmung mittels der alternativen Methode mittels Iodometrie wie in Ph.Eur. beschrieben liefert aber vergleichbare Werte.

Da die erfindungsgemäß verwendete anorganische Phosphorverbindung mit Oxidationsstufen von +1 bis +4 oder gemischten Oxidationsstufen von Oxidationsmitteln oxidiert werden können, verändert sich demnach die Oxidationsstufe der erfindungsgemäßen Phosphorverbindung in Abhängigkeit von der Menge und Art der Phosphorverbindung sowie der Menge an Oxidationsmittel im Verhältnis zur Menge an Phosphorverbindung.

Die anorganische Phosphorverbindung kann im Polymer nachgewiesen werden mittels gängiger Analysemethoden, etwa der ICP-MS-Methode (Massenspektroskopie mittels induktiv-gekoppeltem Plasma) zum Nachweis des Gehaltes einer Probe an beispielsweise Phosphor und Natrium. Phosphinat, Phosphat etc. ist über Ionenchromatographie bestimmbar. Damit ist in einer Polymerprobe der Gehalt an Alkalimetallen und an Phosphorverbindungen wie Phosphinat, Phosphonat und Phosphat nachweisbar.

Dem erfindungsgemäßen Verfahren zur Stabilisierung von oxidationsempfindlichem, peroxidarmem Polymer können prinzipiell alle oxidationsempfindlichen Homo- und Copolymere unterworfen werden.

Der Begriff "Polymer" umfasst im Rahmen der vorliegenden Erfindung beispielsweise lineare, wasserlöslich vernetzte und wasserunlöslich vernetzte Polymere. Der Begriff "wasserunlöslich vernetztes Polymer" umfasst auch die sogenannten Popcorn-Polymere, die im Englischen als "proliferous polymers" oder wie bei Polyvinylpyrrolidon auch als "PVPP" bezeichnet werden. Die Herstellung solcher Popcornpolymere erfolgt durch die als "Popcornpolymerisation" oder "proliferierende Polymerisation" bekannte radikalische Polymerisation.

"Vernetzt" meint Polymer, das statistisch gesehen mindestens eine Verzweigungsstelle je Polymerkette aufweist. Ein Polymer kann dabei trotz seiner Verzweigung und unabhängig von der Zahl der Verzweigungsstellen je Polymerkette noch löslich sein in geeigneten Lösemitteln. "Vernetzt" meint insbesondere ein Polymer, das aufgrund der Zahl der Verzweigungsstellen je Polymerkette oder seiner physikalischen Struktur unlöslich ist in allen Lösemitteln.

"Wasserunlöslich" und "unlöslich" bedeutet im Rahmen dieser Erfindung, dass das Polymer bei 20 °C eine Löslichkeit von weniger als 1 Teil Polymer in 100 Teilen Wasser beziehungsweise Lösungsmittel aufweist.

"Polymer" umfasst Homopolymere, Copolymere, Graft-Homo- und Graft-Co-Polymere, die jeweils als lineare, löslich-vernetzte oder unlöslich-vernetzte Polymere, insbesondere wasserunlöslich-vernetzte Polymere vorliegen können.

Bevorzugt eingesetzt werden Vinyllactam-Polymere. Diese Vinyllactam-Polymere enthalten neben Vinyllactam weiterhin keines, eines oder mehrere Monomere a), keines, eines oder mehrere Monomere b) sowie keines, eines oder mehrere vernetzende Monomere c). Das bedeutet, die Polymere sind durch Polymerisation der genannten Monomeren erhalten worden und können noch Restmengen der Monomeren enthalten. Vinyllactam-Polymer kann neben einem Vinyllactam-Homopolymer daher auch ein Vinyllactam-Copolymer aus zwei oder mehr verschiedenen Vinyllactamen sein.

Geeignete Vinyllactame sind beispielsweise:
N-Vinyllactame wie N-Vinylpyrrolidon ("NVP", "VP"), N-Vinylpiperidon, N-Vinylcaprolactam ("VCap"), deren mit C1 bis C8-Alkyl-Gruppen-substitutierten Derivate wie 3-Methyl-, 4-Methyl-oder 5-Methyl-N-Vinylpyrrolidon.
Bevorzugte Vinyllactame sind N-Vinylpyrrolidon, 3-Methyl-N-vinylpyrrolidon, 4-Methyl-N-vinylpyrrolidon, 5-Methyl-N-vinylpyrrolidon, N-Vinylpiperidon und N-Vinylcaprolactam. Besonders bevorzugte Vinyllactame sind N-Vinylpyrrolidon und N-Vinylcaprolactam. Ganz besonders bevorzugt ist N-Vinylpyrrolidon.

Bevorzugte Vinyllactam-Polymere sind Vinylpyrrolidon-Polymere (Polyvinylpyrrolidone), Vinylpyrrolidon-Copolymere und Vinylpyrrolidon-Popcorn-Polymere. Bevorzugtes Vinyllactam-Copolymer enthaltend nur Vinyllactame enthält N-Vinylpyrrolidon und N-Vinylcaprolactam.

Geeignete Monomere a) sind beispielsweise
N-Vinylamide wie N-Vinylformamid und dessen nach der Polymerisation durch Hydrolyse erhältliches N-Vinylamin, N-Vinyl-N-methylacetamid; Amine wie N-Vinyl- oder Allyl-substituierte heterocyclische Verbindungen, bevorzugt N-Vinylpyridin, oder N-Allylpyridin, N-Vinylimidazole, die auch in 2-, 4- oder 5-Position mit C1-C4-Alkyl, insbesondere Methyl- oder Phenyl-Resten substituiert sein können, wie 1-Vinylimidazol, 1-Vinyl-2-methylvinylimidazol sowie deren quaternisierte Analoga wie 3-Methyl-1-vinylimidazoliumchlorid, 3-Methyl-1-vinylimidazoliummethylsulfat, N- C1- bis C24-Alkyl-substituierte Diallylamine oder deren quaternisierte Analoga wie Diallylammoniumchlorid oder Diallyldimethylammoniumchlorid.
Bevorzugte Monomere a) sind Vinylamide wie Vinylformamid sowie das durch Hydrolyse nach der Polymerisation erhältliche Vinylamin, N-Vinylimidazol, 1-Vinyl-3-methylimidazolium Chlorid, 1-Vinyl-3-methylimidazolium Sulfat, sowie Vinylmethylamid.
Ganz besonders bevorzugte Monomere a) sind Vinylformamid sowie das durch Hydrolyse nach der Polymerisation erhältliche Vinylamin sowie N-Vinylimidazol.

Erfindungsgemäße Polymere können demnach auch Copolymere aus mindestens einem Vinyllactam und mindestens einem Monomer a) sein, beispielsweise Copolymere aus N-Vinylpyrrolidon und N-Vinylimidazol, Copolymere aus N-Vinylpyrrolidon und N-Vinylformamid oder Copolymere aus N-Vinylpyrrolidon, N-Vinylcaprolactam und N-Vinylimidazol. Bevorzugte Copolymere sind Copolymere aus N-Vinylpyrrolidon und N-Vinylimidazol.

Als Monomere b) kommen alle in WO 2010/072640 aus Seite 6, Zeile 8 bis Seite 8, Zeile 17 als Monomere b) bezeichneten Monomere in Betracht, auf die hier ausdrücklich Bezug genommen wird.
Bevorzugte Monomere b) sind Maleinsäure, Maleinsäureanhydrid, Isopropylmethacrylamid, Acrylamid, Methacrylamid, Isopropylacrylamid, N-ter.Butylacrylamid, 2-Hydroxyethyl(meth)acrylamid und 2-Hydroxyethyl-ethylacrylamid, ferner Vinylester aliphatischer C2-C18-Carbonsäuren wie Vinylacetat sowie der durch Hydrolyse nach der Polymerisation daraus erhältliche Vinylalkohol, Vinylpropionat, Vinylbutyrat, Vinyllaurat, Vinylstearat, Vinylneononat "VEOVA 9" und Vinylneodecanoat "VEOVA 10", ferner Dimethylamino(m)ethyl(meth)acrylat und Dimethylamino(m)ethyl(meth)acrylamid und deren quaternierte Analoga und/oder Diallyldimethylammoniumchlorid.

Die Bezeichnung "(m)ethyl(meth)acrylat" und deren Varianten enthaltend nur "(m)" oder "(meth)" bedeutet dabei im Rahmen dieser Erfindung die Substanzen "Methylacrylat", "Ethylacrylat", Methylmethacrylat" und "Ethylmethacrylat". Derivate enthaltend "(m)ethyl(meth)acrylat" ergeben sich daraus analog.

Besonders bevorzugte Monomere b) sind Methacrylamid, Vinylacetat sowie der durch Hydrolyse nach der Polymerisation erhältliche Vinylalkohol, Vinylpropionat, Vinylneononat VEOVA 9 und Vinylneodecanoat VEOVA 10, Dimethylamino(m)ethyl(meth)acrylat, Dimethylamino(m)ethyl(meth)acrylamid sowie deren quaternierte Analoga und/oder Diallyldimethylammoniumchlorid.

Ganz besonders bevorzugt als Monomere b) sind Vinylacetat und/oder Vinylalkohol. Insbesondere bevorzugt ist Vinylacetat.

Polymere, die Copolymere sind und Monomere b) enthalten, können eines oder mehrere der Monomere b) enthalten. Üblicherweise sind jedoch nicht mehr als fünf verschiedene Monomere b) in einem Copolymer enthalten.

Zu den bevorzugten Polymeren zählen desweiteren Copolymere, die mindestens ein Vinyllactam, mindestens ein Monomer a) und mindestens ein Monomer b) enthalten.

Erfindungsgemäße Polymere können demnach auch Copolymere aus N-Vinylpyrrolidon und Vinylacetat, Copolymere aus N-Vinylpyrrolidon, Vinylcaprolactam und Vinylacetat oder Copolymere aus N-Vinylcaprolactam und Vinylacetat sein.

Als vernetzende Monomere c) ("Vernetzer") kommen alle die in WO 2009/024457 auf Seite 7, Zeile 1 bis Seite 9, Zeile 2 beschriebenen in Betracht, auf die hier ausdrücklich Bezug genommen wird.

Bevorzugt als vernetzende Monomere c) sind Pentaerythrittriallylether, Methylenbis-acrylamid, N,N'-Divinylethylenharnstoff, N,N'-Divinylpropylenharnstoff, Divinylbenzol, Ethyliden-bis-3-(N-vinylpyrrolidon), 1-Vinyl-3-ethyliden-pyrrolidon, 3-Vinyl-N-vinylpyrrolidon, 4-Vinyl-N-vinylpyrrolidon, 5-Vinyl-N-vinylpyrrolidon, Allyl(meth)acrylat, Triallylamin, Acrylsäureester von Glykol, Butandiol, Trimethylolpropan und Glycerin, Acrylsäureester von mit Ethylenoxid und/oder Epichlorhydrin umgesetztem Glykol, Butandiol, Trimethylolpropan oder Glycerin sowie Mischungen der vorgenannten Substanzen.

Für die Verwendung zur sogenannten Popcorn-Polymerisation (proliferierende Polymerisation) bevorzugte vernetzende Monomere c) sind N,N'-Divinylethylenharnstoff, Ethyliden-bis-3-(N-vinylpyrrolidon), 1-Vinyl-3-ethyliden-pyrrolidon, 3-Vinyl-N-vinylpyrrolidon, 4-Vinyl-N-vinylpyrrolidon, 5-Vinyl-N-vinylpyrrolidon sowie Mischungen der vorgenannten Substanzen, wovon N,N'-Divinylethylenharnstoff besonders bevorzugt ist.

Die zur Polymerisation eingesetzten Vinyllactame, Monomere a), b) und c) können unabhängig voneinander ein einzelnes oder Mischungen mehrerer Vinyllactame, mehrerer Monomerer a), b) und/oder c) sein, wobei der jeweilige gemeinsame Mengenanteil der Vinyllactame, Monomere a), b) und c) den jeweils dafür genannten Mengenanteil für Vinyllactam, Monomer a), für Monomer b) beziehungsweise für Monomer c) am Polymer ergibt.

Die Mengenanteile in Gewichtsprozent bezogen auf die Gesamtmasse des Polymeren betragen dabei für Vinyllactame üblicherweise mindestens 20 Gewichtsprozent, bevorzugt mindestens 30 Gewichtsprozent, besonders bevorzugt mindestens 50 Gewichtsprozent, ganz besonders bevorzugt mindestens 60 Gewichtsprozent und insbesondere mindestens 97 Gewichtsprozent wie beispielsweise Homopolymere aus 100% eines Vinyllactams oder Polymere aus beispielsweise 98 Gewichtsprozent Vinyllactam und 2 Gewichtsprozent Monomer c).

Die Mengenanteile in Gewichtsprozent bezogen auf die Gesamtmasse des Polymeren betragen dabei für Monomere a) und die Monomere b) unabhängig voneinander üblicherweise bis zu 80 Gewichtsprozent, bevorzugt bis zu 70 Gewichtsprozent, besonders bevorzugt bis zu 50 Gewichtsprozent, ganz besonders bevorzugt bis zu 40 Gewichtsprozent und insbesondere bis zu 20 Gewichtsprozent und sind beispielsweise gar nicht im Polymer vorhanden.

Die Gesamtmengen an Vinyllactam, Monomer a), Monomer b) und Monomer c) addieren sich dabei immer zu 100 Gewichtsprozent bezogen auf das Polymer.

Wenn das Polymer wasserlöslich vernetztes Polymer ist, betragen die Mengenanteile der vernetzenden Monomere c) in Gewichtsprozent bezogen auf die Gesamtmasse des Polymers üblicherweise 0,001 bis 20 Gewichtsprozent, bevorzugt 0,01 bis 10 Gewichtsprozent, besonders bevorzugt 0,05 bis 5 Gewichtsprozent und ganz besonders bevorzugt 0,1 bis 1 Gewichtsprozent.

Wenn das Polymer wasserunlöslich vernetztes Popcornpolymer ist, betragen die Mengenanteile der vernetzenden Monomere c) in Gewichtsprozent bezogen auf die Gesamtmasse des Polymers üblicherweise 0,001 bis 10 Gewichtsprozent, bevorzugt 0,01 bis 5 Gewichtsprozent, besonders bevorzugt 0,1 bis 4 Gewichtsprozent und ganz besonders bevorzugt 0,5 bis 2,5 Gewichtsprozent wie beispielweise 1,4 bis 2,3 Gewichtsprozent.

So enthält beispielsweise ein typisches Popcornpolymer Vinyllactam, etwa bei bevorzugtem wasserunlöslich vernetztem Polyvinylpyrrolidon nur Vinylpyrrolidon, im Mengenanteil von 95 bis 99,8 Gewichtsprozent, bevorzugt 97,5 bis 99,5 Gewichtsprozent, sowie ein vernetzendes Monomer c) im Mengenanteil von 0,2 bis 5 Gewichtsprozent, bevorzugt 0,5 bis 2,5 Gewichtsprozent, beispielsweise 98,1 Gewichtsprozent Vinyllactam und 1,9 Gewichtsprozent Monomer c), wobei bei wasserunlöslich vernetztem Polyvinylpyrrolidon N,N'-Divinylethylenharnstoff als Monomer c) besonders bevorzugt ist.

Polyvinylpyrrolidone sind beispielsweise Polymere mit K-Werten von 10 bis 200, vorzugsweise K15 bis K150, beispielsweise 15, 17, 25, 30, 60, 85, 90, 95, 100, 115 oder K120.

Der K-Wert ist ein Maß für die Molmasse und wird bestimmt über die Lösungsviskosität einer wässrigen Lösung mit definierter Polymer-Konzentration (siehe Volker Bühler in "Polyvinylpyrrolidone excipients for the pharmaceutical industry", 9. überarbeitete Auflage, BASF, Seite 26 bis 29). Er ist nur bestimmbar für Polymere, die eine ausreichende Löslichkeit in Wasser aufweisen.

Vinylpyrrolidon-Copolymere sind beispielsweise Copolymere mit N-Vinylcaprolactam (VCap), Vinylacetat (VAc), N-Vinylimidazol (VI) oder deren Mischungen wie Copolymere aus N-Vinylpyrrolidon (VP) und Vinylacetat mit einem Gewichtsverhältnis VP/VAc von 20:80 bis 80:20, beispielsweise 30:70, 50:50, 60:40, 70:30, mit K-Werten von 10 bis 150, vorzugsweise von 15 bis 80 und besonders bevorzugt von 20 bis 50. Besonders bevorzugte Copolymere aus N-Vinylpyrrolidon und Vinylacetat weisen einen K-Wert von 25 bis 60 und ein Gewichtsverhältnis VP zu VAc von 55:45 bis 70:30 auf wie beispielsweise 60:40, 50:50 und 65:35. Weitere bevorzugte Copolymere sind Copolymere aus VP und VI sowie Copolymere aus VP und VCap jeweils mit K-Werten von 15 bis 150, vorzugsweise von 20 bis 100 und insbesondere von 30 bis 90 sowie Gewichtsverhältnissen der Monomere VP zu VI bzw. VP zu VCap von 80:20 bis 20:80, bevorzugt von 70:30 bis 30:70, besonders bevorzugt von 60:40 bis 40:60 und beispielsweise auch 50:50.

Die Herstellung von Vinyllactam-Polymeren durch radikalische Polymerisation mit oder ohne Verwendung von vernetzenden Monomeren c) ist an sich bekannt. Die Polymerisation liefert dabei lineare oder vernetze Polymere, die je nach Monomerlöslichkeit und gegebenenfalls nach der Anzahl der Vernetzungsstellen und/oder der physikalischen Struktur (der Anordnung der Polymerketten im Raum) wasserlöslich, in Wasser gelbildend oder in Wasser unlöslich sind.

Die Herstellung von Polyvinylpyrrolidonen kann beispielsweise als Lösungs- oder Fällungspolymerisation in einem geeigneten Lösungsmittel wie Wasser, Gemischen aus Wasser und organischen Lösungsmitteln, beispielsweise Ethanol-Wasser oder Isopropanol-Wasser-Gemischen oder in rein organischen Lösungsmitteln wie Methanol, Ethanol oder Isopropanol, erfolgen. Diese Herstellmethoden sind dem Fachmann bekannt.

Bevorzugte wasserunlöslich-vernetzte Polymere sind Polymere aus Vinylpyrrolidon oder Polymere aus Vinylpyrrolidon und/oder Vinylcaprolactam mit Vinylimidazol und/oder Vinylacetat, die mittels der sogenannten "Popcorn"-Polymerisation (auch als proliferierende Polymerisation bezeichnet) hergestellt wurden, weshalb die Polymere im Englischen auch als "proliferous polymer" bezeichnet werden. Wasserunlöslich-vernetzte N-Vinylpyrrolidon-Homopolymere werden auch als "PVPP" oder - im Bereich Pharma - als "Crospovidon" bezeichnet.

Popcorn-Polymerisation und -Polymere sind beschrieben etwa bei Barabas in Encyclopedia of Polymer Science and Engineering, Second Edition, Volume 17, 1989, Seite 212 3. Absatz bis Seite 213, 3.Absatz, oder Haaf, Sanner und Straub, Polymer Journal 1985, Vol. 17, Nr. 1, Seiten 143 bis 152;insbesondere auf den Seiten 148 bis 151.

Die zur Herstellung von Popcorn-Polymeren verwendeten Vernetzer entstehen durch eine der eigentlichen Polymerisationsreaktion vorhergehenden Reaktion oder vorhergehenden Reaktionsschritt in situ oder werden als definierte Verbindung zugesetzt (siehe Haaf et al.).

Bei solchen Popcornpolymeren ist demnach eine Bestimmung der Molmasse nicht möglich, weil Popcornpolymere praktisch unlöslich in allen Lösemitteln sind. Alle üblichen Methoden beruhen aber auf einer wenigstens geringen Löslichkeit der Polymere und sind daher ungeeignet für Popcornpolymere.

Die Herstellung von erfindungsgemäß in Betracht kommenden Popcornpolymeren wie insbesondere wasserunlöslich vernetztem Polyvinylpyrrolidon (PVPP) unter Zusatz von Vernetzern ist beispielsweise auch in der EP-A 88964, der EP-A 438 713 oder der WO 2001/068727 beschrieben.

Die Herstellung von Popcornpolymeren wie PVPP durch Generierung von Vernetzern in situ in einer der eigentlichen Popcornpolymerisation vorgelagerten Reaktion und deren Polymerisation mit den genannten Monomeren zu vernetzten, wasserunlöslichen Popcornpolymeren ist beispielsweise auch aus der US 3,277,066 oder US 5,286,826 bekannt. Bevorzugt erfolgt dabei eine solche Generierung des Vernetzers aus dem Monomer in Gegenwart einer starken Base. Beide Herstellvarianten sind für die vorliegende Erfindung geeignet und daher erfindungsgemäße Ausführungsformen.

Bevorzugt erfolgt die Herstellung gemäß der vorliegenden Erfindung jedoch nach der erstgenannten Methode unter Zusatz von Vernetzern.

Bevorzugte Popcornpolymere werden erhalten aus in situ hergestelltem Vernetzer sowie N-Vinylpyrrolidon, N-Vinylimidazol, N-Vinylcaprolactam und/oder N-Vinylacetat.

Besonders bevorzugte Popcornpolymere werden erhalten unter Verwendung von Divinylethylenharnstoff als vernetzendes Monomer c) sowie N-Vinylpyrrolidon und und/oder N-Vinylcaprolactam als Vinyllactame sowie gegebenenfalls N-Vinylimidazol und/oder N-Vinylacetat als Monomere a).

Die Mengenverhältnisse VP zu VI betragen dabei bei einem VP/VI-Popcornpolymer 0,5:9,5 bis zu 5:5, bevorzugt 1:9.

Ganz besonders bevorzugte Popcornpolymere werden erhalten aus N,N'-Divinylethylenharnstoff und N-Vinylpyrrolidon oder aus N,N'-Divinylethylenharnstoff, N-Vinylpyrrolidon und N-Vinylimidazol.

Insbesondere sind Popcornpolymere aus N,N'-Divinylethylenharnstoff und N-Vinylpyrrolidon bevorzugt.

Die Mengenanteile des Vernetzers an den gesamten Monomeren betragen dabei jeweils 0,5 bis 3 Gewichtsprozent, bevorzugt 1,4 bis 2,3 Gewichtsprozent und ganz besonders bevorzugt 1,9 bis 2,1 Gewichtsprozent.

Wasserunlöslich vernetzte Polymere (Popcornpolymere) sind auch kommerziell erhältlich, beispielsweise als Kollidon® CL, Kollidon® CL-F oder Kollidon® CL-SF sowie als mikronisiertes Produkt Kollidon® CL-M der Firma BASF SE, oder als Polyplasdone® XL, Polyplasdone® XL-10 oder Polyplasdone® INF-10 der Firma ISP Corp., USA (alle Markennamen gehören zum Bereich Pharmaanwendungen). Weitere bekannte Markennamen sind Divergan® der BASF und Polyclar® von ISP.

Popcornpolymere, die N-Vinylpyrrolidon und N-Vinylimidazol im Gewichtsverhältnis 1:9 enthalten, sind auch kommerziell erhältlich etwa als Divergan® HM der Firma BASF SE.

Die Polymere werden erhalten durch die Polymerisation der genannten Monomeren und können daher noch Restmengen dieser Monomeren enthalten. Übliche Restmengen betragen etwa nicht mehr als 100 ppm eines oder aller Monomere bezogen auf den Polymerfestgehalt. Bevorzugt sind Polyvinylpyrrolidone und ganz besonders bevorzugt wasserunlöslich vernetzte Polyvinylpyrrolidon-Popcornpolymere, die nicht mehr als 100 ppm, bevorzugt nicht mehr als 50 ppm, besonders bevorzugt nicht mehr als 10 ppm, ganz besonders bevorzugt nicht mehr als 5 ppm und insbesondere nicht mehr als 1 ppm N-Vinylpyrrolidon beziehungsweise Restmonomer je eingesetztem Monomer bezogen auf den Polymerfestgehalt enthalten.

Werden diese Restmengen an Monomeren nicht direkt durch die Polymerisation erhalten, sind dem Fachmann geeignete Maßnahmen bekannt, um die Monomergehalte abzusenken. Übliche und für die Polymere anwendbare Verfahren sind etwa die thermische Destillation, die Wasserdampfdestillation, die Strippung, die Adsorption sowie bei wasserunlöslich vernetzten Polymeren wie Popcornpolymeren auch etwa die Waschung.

Bevorzugt werden die Polymere erhalten ohne die Anwendung solcher Maßnahmen. Bei Popcornpolymeren erfolgt bevorzugt nur die Waschung.

Im Rahmen dieser Erfindung sind von allen oben genannten Polymeren besonders bevorzugt die Polyvinylpyrrolidone sowie die wasserunlöslich vernetzten Vinylpyrrolidon-Polymere und ganz besonders bevorzugt die wasserunlöslich-vernetzten Polyvinylpyrrolidon-Polymere wie Polyvinylpyrrolidon-Popcorn-Polymer.

Gemäß der vorliegenden Erfindung besonders bevorzugte Polymere enthaltend anorganische Phosphorverbindung sind demnach die Polyvinylpyrrolidone mit K-Werten von 10 bis 200, vorzugsweise K15 bis K150, beispielsweise 15, 17, 25, 30, 60, 85, 90, 95, 100, 115 oder K120, sowie als ganz besonders bevorzugte Polymere die wasserunlöslich vernetzten, peroxidarmen Vinylpyrrolidon-Polymere aus 0,5 bis 2,5 Gew.% N,N'-Divinylethylenharnstoff und 97,5 bis 99,5 Gew.% N-Vinylpyrrolidon, die - jeweils bezogen auf den Polymerfestgehalt - einen Peroxid-Gehalt bestimmt zum Zeitpunkt der Herstellung von nicht mehr als 50 ppm, bevorzugt nicht mehr als 20 ppm und besonders bevorzugt von nicht mehr als 10 ppm und/oder einen Peroxid-Gehalt bestimmt zu einem beliebigen Zeitpunkt innerhalb von bis zu drei Monaten nach Herstellung von nicht mehr als 100 ppm, bevorzugt nicht mehr als 50 ppm und besonders bevorzugt von nicht mehr als 20 ppm wie beispielsweise weniger als 10 ppm oder gar weniger als 5 ppm aufweisen. Der Peroxid-Gehalt wird dabei mittels der Titanylsulfat-Methode gemäß europäischer Pharmacopöe Ausgabe 7 ermittelt. Ebenso weisen diese Vinyllactam-Polymere - bezogen auf den Polymerfestgehalt - Restmonomergehalte je eingesetztem Monomer von nicht mehr als 100 ppm, bevorzugt nicht mehr als 50 ppm, besonders bevorzugt nicht mehr als 20 ppm, ganz besonders bevorzugt nicht mehr als 10 ppm und insbesondere nicht mehr als 5 ppm wie beispielsweise weniger als 1 ppm auf.

Das erfindungsgemäße Verfahren zur Stabilisierung von oxidationsempfindlichem, peroxidarmem Polymer gegen Peroxidbildung ist dadurch gekennzeichnet, dass während oder nach der Polymerisation wenigstens eine anorganische Phosphorverbindung in solchen Mengen in einer oder mehreren Portionen zugegeben wird, dass der Gesamtphosphorgehalt pro Kilogramm Polymerfestgehalt des fertigen Polymers 2*10⁻⁵ bis 0,02 mol beträgt, und das solchermaßen behandelte Polymer in eine Schutzgasgefüllte, abgeschlossene Verpackungsform gegeben wird. In einer bevorzugten Ausführungsform des Verfahrens weist das Schutzgas weniger als 0,5 Vol% Sauerstoff enthält.

In einer weiteren bevorzugten Ausführungsform des Verfahrens ist die anorganische Phosphorverbindung ausgewählt aus der Gruppe der Sauerstoffsäuren des Phosphors mit Phosphor der Oxidationsstufen +1, +2, +3, +4 oder gemischten Oxidationsstufen, und deren Salzen.

In einer weiteren bevorzugten Ausführungsform des Verfahrens ist das Polymer ausgewählt aus (i) Homo- und Copolymeren von N-Vinylverbindungen, wasserlöslichen und wasserunlöslich vernetzten Homo- und Copolymeren von N-Vinylpyrrolidon, N-Vinylpyrrolidon-Vinylacetat-Copolymeren, (ii) Mischungen von zwei oder mehreren dieser Polymeren oder (iii) Mischungen enthaltend eines oder mehrere dieser Polymere.

Diese bevorzugten Ausführungsformen können selbstverständlich beliebig miteinander kombiniert werden. In einer besonders bevorzugten Ausführungsform sind diese drei bevorzugten Ausführungsformen kombiniert.

Die Phosphorverbindung wird in einer Ausführungsform des Verfahrens zu einem Zeitpunkt zugesetzt, an dem die Polymerisation zu wenigstens 90 Prozent, bevorzugt zu wenigstens 95 %, besonders bevorzugt zu wenigstens 98% und ganz besonders bevorzugt zu wenigstens 99,9 % abgeschlossen ist, beispielsweise zu 99,99% oder gar vollständiger Umsatz erreicht wurde. Der Umsatz bezieht sich dabei immer auf die polymerisierbaren Bestandteile in der Reaktionsmischung, also die Vinyllactame, Monomere a), b) und c), sofern zur Polymerisation eingesetzt.

In einer weiteren Ausführungsform des Verfahrens wird die Phosphorverbindung erst nach dem Ende der Polymerisation, nach dem Ende einer anschließenden Nachpolymerisation oder nach dem Ende einer daran anschließenden Nachbehandlung wie saure Hydrolyse, Strippung, Dampfdestillation oder thermische Destillation zugegeben. Der späteste Zeitpunkt der Zugabe ist nach Abfüllung einer Polymerlösung oder Polymersuspension zum abgefüllten Polymerprodukt in die Verpackungsform. Ist eine Trocknung der erhaltenen Polymerlösung oder Polymersuspension zu einem festen Polymer vorgesehen, so erfolgt die Zugabe der Phosphorverbindung spätestens während der Trocknung, etwa als Zugabe bei der Sprühtrocknung.

Bevorzugt ist, sofern eine Polymerlösung oder Polymersuspension als Endprodukt gewünscht ist, die Zugabe nach Ende aller Nachbehandlungen und vor der Abfüllung. Dadurch kann eine gute Vermischung mit dem Polymer erreicht werden, etwa durch Einmischen oder durch Turbulenzen beim Einfüllen in die Verpackungsform.

Bevorzugt ist sofern festes Polymer als Endprodukt gewünscht ist, die Zugabe zu der zu trocknenden Lösung oder Suspension unmittelbar vor der Trocknung, so dass die Phosphorverbindung gleichmäßig in der Lösung oder Suspension verteilt ist.

Das Verfahren zur Herstellung des Polymers erfolgt nach üblichen Herstellmethoden, bei Vinylmonomeren üblicherweise durch Polymerisation in Wasser, organischem Lösemittel oder deren Mischungen, kann aber auch in Abwesenheit von Lösemittel als Massepolymerisation durchgeführt werden. Je nach Löslichkeit der Monomeren ist aber auch eine Suspensions-, Emulsions- oder Fällungspolymerisation möglich.

Typische Vertreter der organischen Lösemittel sind etwa C1- bis C8-Alkohole wie Methanol, Ethanol, n-Propanol, iso-Propanol, Butanol, Glykol, Glyzerin, Diethylether. Bevorzugt wird Methanol, Ethanol und/oder iso-Propanol eingesetzt.

Wasser kann Wasser unterschiedlicher Qualität sein: Wasser technischer Qualität, Wasser natürlich vorkommender Qualität wie Oberflächenwasser, Flusswasser oder Grundwasser sowie gereinigtes Wasser. Gereinigtes ("reines") Wasser kann durch Reinigungsmethoden wie ein-oder mehrfache Destillation, Entsalzung, Diffusion, Adsorption, mittels Ionentauscher sowie Aktivkohle oder anderen Absorbern, mittels eines Filtrationsverfahrens wie Ultrafiltration oder Dialyse gereinigt werden. Als gereinigtes Wasser wird dabei üblicherweise einfach oder mehrfach destilliertes Wasser sowie vollentsalztes Wasser bezeichnet.

Bevorzugt eingesetzt werden organische Lösemittel, Wasser oder deren Mischungen. Ganz besonders bevorzugt ist die Verwendung von überwiegend Wasser, insbesondere von gereinigtem Wasser.

Die Polymerisation erfolgt in der Regel als radikalische Polymerisation, meist initiiert durch Zusatz Radikal-bildender Substanzen. Die sogenannte Popcornpolymerisation findet dagegen in der Regel ohne Zusatz solcher Substanzen spontan statt.

Die Polymerisation kann dabei durch alle dem Fachmann bekannten Methoden gestartet werden, etwa durch Zusatz von Radikalbildnern wie Azostarter, Peroxide, Redoxsysteme sowie UV-Licht und/oder Strahlung. Bevorzugt ist der Zusatz von Radikalbildner, insbesondere von Azostartern, organischen Peroxiden und/oder Wasserstoffperoxid.

Die Herstellung erfolgt im Falle der löslichen vernetzten Polymere bevorzugt in Lösung, bei wasserlöslichen vernetzten Polymeren besonders bevorzugt in wässriger Lösung. Im Falle der unlöslich vernetzten Polymere wie der Polyvinylpyrrolidon-Popcornpolymere erfolgt die Herstellung in Masse oder als Fällungspolymerisation. Bei der Fällungspolymerisation wird ausgehend von einer wässrigen Lösung oder Dispersion der Monomere eine Polymerdispersion (meist eine Suspension) in Wasser erhalten. Bevorzugt im Falle der wasserunlöslichen vernetzten Polyvinylpyrrolidon-Popcornpolymere ist deren Herstellung mittels Fällungspolymerisation (der "Popcornpolymerisation") in gereinigtem Wasser.

Geeignete Herstellmethoden für die erfindungsgemäßen Popcornpolymere sind insbesondere in EP1263813 B1 (ganzes Dokument) sowie in DE 19547761 A1 (Seite 2, Zeile 61 bis Seite 3, Zeile 29 und Beispiel 1a) beschrieben, auf die hier ausdrücklich Bezug genommen wird. Weitere geeignete Herstellvorschriften finden sich in EP-A 88964, EP-A 438 713 oder der WO 2001/068727 sowie der US 3,277,066 und US 5,286,826.

Ebenso möglich und von der vorliegenden Erfindung umfasst ist die Anwendung des aus der EP 1263813 B1 bekannten Verfahrens zur Popcornpolymerisation unter Einstellung de Teilchengröße der Popcornpolymere mittels Inertgasstrom und/oder Reduktionsmittel, dessen Verfahrensschritte in den Absätzen [0011], [0019] bis [0025] sowie den Beispielen beschrieben werden, auf die hier in vollem Umfang Bezug genommen wird.

Geeignete Reaktionsbehältnisse sind alle dem Fachmann für solche Reaktionen geeigneten Behältnisse, wie Rührkessel, Rohrreaktoren, Extruder, Kneter oder Wirbelbettreaktoren. Bevorzugt findet die Fällungspolymerisation in Rührkesseln statt. Die Massepolymerisation erfolgt bevorzugt in Rührkesseln oder Knetern.

Die hergestellten Polymerlösungen oder -dispersionen weisen üblicherweise einen Feststoffgehalt von 5 bis 80 Gew.-%, bevorzugt 5 bis 60 Gew.-% auf. Bei Dispersionen beträgt der Feststoffgehalt besonders bevorzugt 5 bis 25 Gew.-% und insbesondere 8 bis 15 Gew.-%.

Besonders bevorzugt werden solche Mengen an Phosphorverbindung eingesetzt, dass im Polymer nach der Herstellung nur solche Mengen verbleiben, dass der Gesamtaschegehalt (auch Glührückstand genannt) sowie die maximalen Inhaltsmenge an Phosphorverbindung (bei Verwendung mehrerer Substanzen als Phosphorverbindung bezieht sich die jeweilige Inhaltsmenge auf jede einzelne Substanz) sowie der Gesamtphosphorgehalt die jeweiligen Anforderungen gemäß den "relevanten Vorschriften" erfüllt.

Solche "relevanten Vorschriften" zu den maximalen Aschegehalten und den Inhaltsmengenbegrenzungen für bestimmte Substanzen zu den jeweiligen Polymeren sind dem Fachmann im jeweiligen Anwendungsgebiet bekannt. Im Pharmabereich relevante Vorschriften sind etwa die Europäische Pharmacopöe (Ph.Eur.), die Japanische Pharmacopöe für Excipients (JPE), die US-amerikanische Pharmacopöe (USP) oder das Deutsche Arzneibuch (DAB) in ihrer jeweils aktuellsten gültigen Fassung. Für den Lebensmittelbereich relevante Vorschriften sind etwa die Vorschriften der Food and Drug Administration (FDA) in USA oder das deutsche Lebensmittelrecht.

Der Fachmann im jeweiligen Arbeitsgebiet weiß daher, welche jeweilige Vorschrift für die Anwendung als relevant beachtet werden muss und kann daher ohne weiteres feststellen, welche Obergrenze für den Gesamtaschegehalt und welche Obergrenzen für Substanzen und Substanzklassen existieren und einzuhalten sind.

Im konkreten Fall der Ausübung der vorliegenden Erfindung wird der Fachmann üblicherweise anhand der relevanten Vorschriften zuerst den zulässigen Gesamtaschegehalt und die jeweiligen Obergrenzen für das jeweilige Polymer ermitteln und dann die zulässige Menge an der einzelnen Phosphorverbindung und den Gesamtphosphorgehalt berechnen. Ebenso wird er nach generell bekannten Methoden den tatsächlichen Gesamtaschegehalt und die jeweilige Inhaltsmenge des Polymers ohne die Behandlung bestimmen. Aus der Differenz von Gehalten ohne die Behandlung und den zulässigen Obergrenzen gemäß den relevanten Vorschriften kann der Fachmann ohne weiteres die maximale Zugabemenge an Phosphorverbindung für dieses Polymer berechnen. Üblicherweise wird er für die Zugabemenge einen Sicherheitsabschlag von etwa 5 bis 10 % bezogen auf die maximale Zugabemenge festlegen, um Produktionsschwankungen berücksichtigen zu können. Übliche Schwankungen des Prozesses in der jeweils ausgeübten Ausführung kann der Fachmann einfach bestimmen und daraus den für diesen Prozess sinnvollen Sicherheitsabschlag festlegen.

Erfindungsgemäß kann zu dem peroxidarmen Polymer nach der Polymerisation zusätzlich Reduktionsmittel und/oder Antioxidans zugegeben werden. Dadurch kann die Stabilität gegenüber Oxidation und/oder weiterer Peroxidbildung nochmals verbessert werden.

"Antioxidans" kann eine einzelne Verbindung oder eine Mischung mehrerer Antioxidantien sein. Solche Verbindungen werden auch als Radikalfänger bezeichnet und sind im Rahmen dieser Erfindung vom Begriff "Antioxidans" umfasst.

"Reduktionsmittel" kann eine einzelne Verbindung oder eine Mischung mehrerer Reduktionsmittel sein.

Werden Reduktionsmittel und weiteres Antioxidans eingesetzt, kann diese Zugabe parallel oder sequentiell erfolgen. Bevorzugt erfolgt die Zugabe sequentiell. Besonders bevorzugt erfolgt zuerst der Zugabe von Reduktionsmittel und dann die Zugabe von weiterem Antioxidans.

Werden Reduktionsmittel zugesetzt, so erfolgt deren Zugabe vor der Zugabe der Phosphorverbindung. Wird Antioxidans eingesetzt, so erfolgt dessen Zugabe vor oder nach der Zugabe von Phosphorverbindung, bevorzugt danach.

Reduktionsmittel und/oder Antioxidans sowie Phosphorverbindung kann dabei in fester Form, dispergiert oder gelöst in einem geeigneten Lösemittel zu dem in Flüssigkeit vorliegendem Polymer gegeben werden. Bevorzugtes Lösemittel ist das gleiche wie die für die Herstellung jeweils verwendete Flüssigkeit. Besonders bevorzugt ist Wasser.

Die Zugabe von Phosphorverbindung sowie gegebenenfalls Reduktionsmittel und/oder Antioxidans erfolgt in der Regel bei Temperaturen von 10 bis 100 °C, vorzugsweise 15 bis 80 °C und besonders bevorzugt 20 bis 60°C. Der bevorzugte pH-Bereich für die Zugabe liegt bei 3 bis 11, vorzugsweise 5 bis 10, besonders bevorzugt 6 bis 9.

Wird Reduktionsmittel eingesetzt, so folgt nach der Zugabe von Reduktionsmittel im Allgemeinen eine Wartezeit, zweckmäßigerweise bei erhöhter Temperatur. In dieser Wartezeit wird die Polymerlösung oder -dispersion bei erhöhter Temperatur von 20 bis 90 °C, bevorzugt bei 40 bis 80 °C, gehalten und bevorzugt durchmischt. Diese Wartezeit dauert üblicherweise wenige Minuten bis zu mehreren Stunden, bevorzugt wenigstens 5 Minuten, besonders bevorzugt wenigstens 30 Minuten und ganz besonders bevorzugt wenigstens 60 Minuten, üblicherweise jedoch nicht länger als 4 Stunden, bevorzugt nicht länger als 2 Stunden.

Der Zugabe von Phosphorverbindung folgt optional eine weitere Wartezeit, bevorzugt ebenfalls unter Durchmischen. Diese weitere Wartezeit nach Zugabe von Phosphorverbindung dauert üblicherweise wenige Minuten bis zu mehreren Stunden, bevorzugt wenigstens 5 Minuten, besonders bevorzugt wenigstens 10 Minuten und ganz besonders bevorzugt wenigstens 15 Minuten, üblicherweise jedoch nicht mehr als 2 Stunden und bevorzugt nicht mehr als 1 Stunde. Der optionalen Zugabe von Antioxidans folgt optional eine weitere Wartezeit, bevorzugt ebenfalls unter Durchmischen. Diese weitere Wartezeit nach Zugabe von Antioxidans dauert üblicherweise wenige Minuten bis zu mehreren Stunden, bevorzugt wenigstens 5 Minuten, besonders bevorzugt wenigstens 15 Minuten und ganz besonders bevorzugt wenigstens 30 Minuten, üblicherweise jedoch nicht mehr als 2 Stunden und bevorzugt nicht mehr als 1 Stunde.

Mit zunehmenden Volumen an Polymerlösung oder -dispersion steigt jeweils die Dauer der Wartezeit nach Zugabe von Reduktionsmittel, Phosphorverbindung und Antioxidans. Die genannten Zeitangaben eignen sich bereits für die kommerzielle Produktion im Rührkessel im Maßstab von mehreren Tonnen Polymer.

Eine Anpassung an andere Prozesse ist damit dem Fachmann leicht möglich.

Zu berücksichtigen ist dabei, dass eine deutliche Erhöhung der Wartezeit nach Zugabe von Phosphorverbindung und optionalem Antioxidans in der Regel keinen nennenswerten Effekt bringt. Es ist lediglich dabei - wie natürlich auch beim Einmischen von Reduktionsmittel - eine gute Durchmischung mit dem Polymer und eine gleichmäßige Verteilung im Polymer sicherzustellen.

"Reduktionsmittel" im Sinne dieser Erfindung sind Schwefeldioxid, schweflige Säure oder Sulfite, bevorzugt Alkali- oder Erdalkalisulfite, beispielsweise Kalium-, Kaliumhydrogen-, Lithium-, Lithiumhydrogen-, Natrium- oder Natriumhydrogen-Sulfit sowie Ammonium- und Ammoniumhydrogen-Sulfit, wobei Natriumsulfit, Natriumhydrogensulfit und Schwefeldioxid besonders bevorzugt sind. Ganz besonders bevorzugt ist Schwefeldioxid als wässrige Lösung.

Soll Reduktionsmittel und/oder Antioxidans eingesetzt werden, so reichen bereits geringe Mengen aus.

Reduktionsmittel kann beispielsweise in Mengen von 0.005 bis 1 Gew.-%, bezogen auf festes Polymer verwendet werden, vorzugsweise mindestens 0.01 Gew.-% und besonders bevorzugt mindestens 0,03 Gew.-%, vorzugsweise bis zu 0.5 Gew.-% und besonders bevorzugt bis zu 0,20 Gew.-%.

Antioxidans kann beispielsweise in Mengen von 0.01 bis 1 Gew.-%, bezogen auf festes Polymer, vorzugsweise mindestens 0.03 Gew.-% und besonders bevorzugt mindestens 0,05 Gew.-%, vorzugsweise bis zu 0.5 Gew.-% und besonders bevorzugt bis zu 0,25 Gew.-%, eingesetzt werden.

Geeignetes Antioxidans, das erfindungsgemäß verwendet werden kann, ist beispielsweise als Antioxidans aus WO2010/072640 auf Seite 25 bekannt, auf die hier ausdrücklich Bezug genommen wird.

Als Antioxidans kommen daher beispielsweise in Betracht: Ascorbinsäure, Erythorbinsäure, Nordihydroguajaretsäure, Ethoxyquin, Bisabolol, Ascorbylpalmitat oder BHT ("Butylhydroxytoluol": 2,6-Di-tertiärbutyl-4-methyl-phenol), Derivate und Salze dieser Substanzen oder Mischungen der vorgenannten Substanzen.

So können beispielsweise Ammonium-, Alkali-, Erdalkali-Salze etwa der Ascorbinsäure wie Ammoniumascorbat, Natriumascorbat oder Magnesiumascorbat oder deren Mischungen verwendet werden. Ebenso eignen sich Ester von beispielsweise Ascorbinsäure mit anorganischen oder organischen Säuren, wie Ascorbylcarbonat, Ascorbylphosphat, Ascorbylsulfat, Ascorbylstearat oder Ascorbylpalmitat, sowie deren Ammonium-, Alkali-, Erdalkali-Salze beispielsweise Natriumascorbylphosphat oder Natriumascorbylpalmitat. Die analogen Verbindungen der Erythorbinsäure sind ebenso einsetzbar. Mischungen aller vorgenannten Verbindungen können ebenfalls verwendet werden.

Bevorzugt eingesetzt werden als Antioxidans Ascorbinsäure, Erythorbinsäure, Alkali-, Erdalkali-oder Ammonium-Salze dieser Säuren, deren Derivate wie Ester, Ether oder Amide oder Mischungen der vorgenannten Substanzen. Besonders bevorzugt eingesetzt werden Ascorbinsäure oder Erythorbinsäure, ganz besonders bevorzugt nur Ascorbinsäure.

Bei Verwendung von Reduktionsmittel und Antioxidans werden besonders bevorzugt als Reduktionsmittel Schwefeldioxid und als weiteres Antioxidans Ascorbinsäure und/oder Erythorbinsäure, insbesondere nur Schwefeldioxid und Ascorbinsäure, eingesetzt.

Besonders bevorzugt beim erfindungsgemäßen Verfahren ist die Verwendung von Phosphorverbindung und Antioxidans, ohne Verwendung von Reduktionsmittel.

Ganz besonders bevorzugt beim erfindungsgemäßen Verfahren ist die Verwendung von Phosphorverbindung, ohne Verwendung von Reduktionsmittel und ohne Antioxidans.

Das erfindungsgemäße Polymer enthält demnach besonders bevorzugt nur Phosphorverbindung und Antioxidans und kein Reduktionsmittel.

Das erfindungsgemäße Polymer enthält demnach ganz besonders bevorzugt nur Phosphorverbindung und kein Antioxidans und kein Reduktionsmittel.

Die Zugabe von Phosphorverbindung, optionalem Reduktionsmittel und optionalem Antioxidans erfolgt jeweils vorzugsweise unter Durchmischung wie Rühren. Auch die Durchmischung mittels Einblasen von Gas, etwa eines Schutzgases, oder durch Umpumpen mit und ohne statische Mischer ist möglich ebenso wie Kombinationen mehrerer Methoden zur Durchmischung.

An die Polymerisation kann sich, muss aber nicht eine Nachpolymerisation anschließen. Zur Nachpolymerisation kann etwa Radikalbildner (Initiator) zugesetzt werden. Alle dem Fachmann bekannten Initiatoren sind prinzipiell geeignet. Für die Nachpolymerisation bei einer Popcornpolymerisation bevorzugt sind wasserlösliche Azoinitiatoren, deren Zerfallsprodukte für die geplante Anwendung des Polymers nicht prohibitiv sind, also beispielsweise keine Trübung, Geruch oder Toxizität hervorrufen.

Es kann auch, gegebenenfalls auch zusätzlich nach einer Nachpolymerisation, eine chemische Nachbehandlung erfolgen wie eine saure oder basische Hydrolyse etwa zur Restmonomerabsenkung. Weiterhin ist eine physikalische Nachbehandlung möglich wie die Destillation, die Wasserdampfdestillation und/oder die Strippung.

Wasserunlöslich vernetztes Popcornpolymer wie insbesondere PVPP wird nach der Polymerisation und einer eventuell daran anschließenden Nachbehandlung üblicherweise vom Lösungsmittel abgetrennt, meist durch Filterung. Üblicherweise folgt eine ein- oder mehrmalige Waschung, in der Regel mit gereinigtem Wasser wie destilliertem Wasser. Anschließend wird meist der Wassergehalt durch etwa Pressen des Polymers verringert.

Da durch die Waschung die im Polymer verbleibende Menge an Phosphorverbindung und optionalem Antioxidans sowie optionalem Reduktionsmittel geringer werden kann, kann durch eine einfache Bestimmung die Menge an Phosphorverbindung und optionalem Antioxidans und optionalem Reduktionsmittel im Polymer unmittelbar vor der Trocknung und nach Waschung und Abpressen ermittelt werden.

Ist die zur Trocknung im Polymer verbleibende Menge niedriger als gewünscht, kann durch wiederholte Anpassung der Mengen an Phosphorverbindung im Polymer vor dem Trocknen und Bestimmung der Mengen an Phosphorverbindung im festen Polymer leicht die im festen Polymer verbleibende Menge an Phosphorverbindung eingestellt werden.

Eine Einstellung der Phosphormenge ist möglich etwa durch Erhöhung der Zugabemenge vor oder bei dem Waschschritt, durch eine Zugabe unmittelbar vor dem Abpressen oder durch Zugabe von Phosphorverbindung nach dem Abpressen, etwa als Feststoff oder als Lösung oder Dispersion beispielsweise durch Aufsprühen.

Die Polymerisation sowie gegebenenfalls eine physikalische und/oder chemische Nachbehandlung wie saure Hydrolyse, Strippung, Destillation, Adsorption, Nachbehandlung mit Reduktionsmittel und/oder Antioxidans sowie die Zugabe von Phosphorverbindung erfolgt zweckmäßigerweise unter einer Schutzgasatmosphäre.

Das Polymer kann - falls gewünscht - nach Polymerisation und optionaler Nachbehandlung durch Trocknung in festes Polymer, etwa rieselfähiges Pulver, überführt werden. Dem Fachmann sind Methoden zur Trocknung bekannt.

Die Trocknung kann beispielsweise durch Sprühtrocknung, Walzentrocknung oder eine andere Warmluft- oder Kontaktwärmetrocknung erfolgen. Auch die Trocknung mittels Vakuumtrocknung oder Gefriertrocknung ist möglich. Alle anderen Methoden zur Trocknung sind prinzipiell ebenfalls geeignet. Trocknungsverfahren unter Sprühen wie Sprühtrocknung und mittels Kontaktflächen wie Walzentrocknung sind bevorzugte Trocknungsverfahren.

Auf die Trocknung kann aber auch verzichtet werden, etwa wenn Polymerlösungen oder - dispersionen gewünscht werden.

Als Schutzgasatmosphäre bezeichnet wird der vollständige oder teilweise Austausch von Luft durch Schutzgas (gleichbedeutend mit "Inertgas") wie etwa Stickstoff, Helium, Argon und/oder Kohlenstoffdioxid oder deren Mischungen. Als Schutzgas kommt vorzugsweise Stickstoff in Betracht. Bevorzugt wird Schutzgas, insbesondere Stickstoff, dergestalt eingesetzt, dass der Sauerstoffgehalt im System kleiner 50.000 ppm, bevorzugt kleiner 20.000 ppm, besonders bevorzugt kleiner 10.000 ppm und ganz besonders bevorzugt kleiner 5000 ppm beträgt. So kann etwa ein Sauerstoffgehalt von weniger als 1000 ppm oder gar weniger als 500 ppm erreicht werden (ppm: bezogen auf das Gasvolumen; 5000 ppm entsprechen 0,5 Vol%).

In einer bevorzugten Ausführungsform erfolgt die Herstellung des Polymers unter Stickstoffschutzgasatmosphäre mit weniger als 20.000 ppm, besonders bevorzugt weniger als 5.000 ppm, ganz besonders bevorzugt weniger als 1000 ppm Sauerstoff.

In einer bevorzugten Ausführungsform erfolgt die Nachpolymerisation, die physikalische, chemische oder sonstige Nachbehandlung wie Waschung und/oder die Nachbehandlung mit Reduktionsmittel und/oder Antioxidans sowie die Zugabe von Phosphorverbindung unter Stickstoffschutzgasatmosphäre mit weniger als 20.000 ppm, besonders bevorzugt weniger als 5.000 ppm, ganz besonders bevorzugt weniger als 1.000 ppm Sauerstoff wie beispielsweise weniger als 500 ppm.

Um die erneute Bildung von Peroxiden durch Sauerstoff beim Trocknen zu vermeiden und dadurch noch geringere Peroxidgehalte zu erzielen, empfiehlt es sich auch, die Trocknung unter Schutzgas, insbesondere unter Schutzgas mit einem geringen Sauerstoffrestgehalt im Trocknungsgas von beispielsweise weniger als 50.000 ppm, bevorzugt weniger als 20.000 ppm, besonders bevorzugt weniger als 10.000 ppm, ganz besonders bevorzugt weniger als 5000 ppm und insbesondere weniger als 1000 ppm beträgt wie weniger als 500 ppm.

Bevorzugt erfolgt daher die erfindungsgemäße Trocknung von peroxidarmem Polymer zu festem Polymer, insbesondere von Vinyllactam-Polymer wie wasserunlöslich-vernetzem Polyvinylpyrrolidon, mittels warmem Trocknungsgas, insbesondere mit Schutzgas wie Stickstoff mit geringem Sauerstoffrestgehalt.

Das erfindungsgemäße Verfahren zur Stabilisierung erfolgt so, dass in der abgeschlossenen Verpackungsform das oxidationsempfindliche, peroxidarme Polymer, enthaltend mindestens eine anorganische Phosphorverbindung in solchen Mengen, dass der Gesamtphosphorgehalt pro Kilogramm Polymerfestgehalt des fertigen Polymers 2*10⁻⁵ bis 0,02 mol beträgt, unter einer Schutzgasatmosphäre vorliegt, die einen Sauerstoffgehalt von weniger als 20.000 ppm, bevorzugt weniger als 5.000 ppm, besonders bevorzugt weniger 2000 ppm, ganz besonders bevorzugt weniger als 1000 ppm und insbesondere weniger als 500 ppm aufweist.

Festes Polymer wird üblicherweise direkt nach der Trocknung sowie gegebenenfalls daran anschließender Siebung und/oder Sichtung in geeignete Verpackungsmaterialien abgefüllt. Polymerlösungen und -dispersionen werden üblicherweise direkt in geeignete Verpackungsformen abgefüllt.

Prinzipiell können alle Verpackungsmaterialien eingesetzt werden, die für Pharma-, Lebensmittel- oder Kosmetikanwendungen oder für die jeweils angestrebte Anwendung geeignet und zulässig sind.

Vorteilhaft als Materialien für Verpackungsformen sind für Sauerstoff wenig oder nahezu nicht permeable Materialien. Durch Vermeiden oder Minimieren des Kontakts des Polymers mit Sauerstoff während der Lagerung wird die weitere Oxidation des Polymeren nochmals weiter verringert.

Zusätzlich zur Durchführung der Polymerisation und/oder darauffolgenden Schritten und/oder einer Trocknung unter Schutzgas kann natürlich auch die Verpackung des Polymers zusätzlich unter Stickstoff- oder Edelgasbegasung oder mittels Vakuumieren erfolgen. Selbstverständlich verbessert auch die alleinige Verwendung von Inertverpackungsmaterialien, wie insbesondere von für Sauerstoff wenig oder nahezu undurchlässigen Materialien und Folien die Stabilität des Polymeren gegen Oxidation und Peroxidaufbau weiter. Ebenso verbessert natürlich die Verpackung unter Schutzgas in solchen Inertverpackungsmaterialien das Ergebnis weiter.

Bevorzugt liegt das Polymer am Ende des Verfahrens zur Stabilisierung unter einer Schutzgasatmosphäre in der abgeschlossenen Verpackungsform vor.

Geeignete Verpackungsmaterialien und Verfahren zur Verpackung sind beispielsweise bekannt aus DE 202009000692 U1 und WO 2010052088 A1.

Von der vorliegenden Erfindung umfasst sind die Verwendung der in WO 2010052088 A1 offenbarten Mehrschichtfolien für Verpackungsformen, die dort offenbarten Verpackungsformen, die dort offenbarten Umverpackungen sowie die dort offenbarten Verfahren zur Verpackung, offenbart auf Seite 12, Zeile 12 bis Seite 25, Zeile 14 sowie die Zeichnungen 1 bis 9 und deren Erläuterung auf Seite 25, Zeile 16 bis Seite 28, Zeile7, deren Offenbarung hier voll umfänglich einbezogen wird. Die genannte Schrift offenbart dort Mehrschichtfolien mit Sperrschichteigenschaften, die Barriereschichten enthalten bezüglich Gas-, insbesondere Sauerstoffdurchlässigkeit mit bestimmten maximalen Sauerstoffdurchlässigkeiten sowie mit bestimmten maximalen Wasserdampfdurchlässigkeiten. Ferner wird der Schichtaufbau und die Herstellung und die dazu verwendeten Einsatzstoffe solcher Mehrschichtfolien offenbart. Weiterhin offenbart werden Verpackungsformen aus diesen Mehrschichtfolien, die Formen wie Seitenfaltensack, Schlauch und Endlosschlauch, Eigenschaften von solchen Verpackungsformen. Ebenso offenbart werden verschiedene Möglichkeiten, solche Verpackungen zu verschließen. Weiterhin offenbart werden auch die Verfahren, Polymere als Pulver, Lösung oder Dispersion in solche Verpackungsformen abzufüllen, insbesondere unter inerten Bedingungen. Auch Umverpackungen für solche Verpackungsformen werden offenbart. Die Zeichnungen 1 bis 9 zeigen den Aufbau der Mehrschichtfolien, der Verpackungsformen und der Umverpackungen.

Die in der WO 2010052088 A1 bevorzugten Ausführungsformen sind auch im Rahmen dieser Erfindung die bevorzugten Ausführungsformen der Mehrschichtfolien und der sonstigen Einsatzstoffe für die Folien, der Verpackungsformen und der Verfahren zur Verpackung, wobei zusätzlich im Rahmen dieser Erfindung auch Aluminium anstelle von EVOH als Material für die Barriereschicht bevorzugt ist.

Im Rahmen dieser Erfindung weiterhin bevorzugte Barriereschichten sind demnach auch die in WO 2010/072640 dafür offenbarten Polyvinylalkohol-Polymere auf Seite 14, Zeilen 2 bis 12, insbesondere die Ethylen-Vinylalkohol-Polymere auf Seite 14, Zeilen 14 bis 24.

Wird Aluminium als Barriereschicht verwendet, so können prinzipiell die gleiche Vorgehensweise zu Herstellung und Verwendung in Betracht kommen wie in der WO 2010052088 A1 offenbart. Bevorzugt ist dabei ein Schichtaufbau aus wenigstens drei Schichten mit der Aluminiumschicht als Mittellage und zwei Polymerschichten, bevorzugt wasserabweisenden Polymerschichten, auf beiden Seiten. Möglich ist auch die Verwendung von Haftschichten zwischen Polymerschicht und Aluminiumschicht, so dass sich eine vierlagige oder fünflagige Folie ergibt. Als Polymere für diese Polymerschichten auf beiden Seiten der Barriereschicht kommen prinzipiell alle auch in der WO 2010052088 A1 dafür offenbarten Polymere auf Seite 13, Zeilen 31 bis 42 in Frage. Bevorzugt sind Polymere ausgewählt aus Polyestern, Polyamid, Polyvinylchlorid, Zellglas oder Polyolefinen. Besonders bevorzugt sind Polyolefine, ganz besonders bevorzugt Polyethylen und insbesondere die weichen, biegsameren foliengeeigneten Typen wie LDPE und LLDPE.

Als Haftschichten kommen bevorzugt die in WO 2010052088 A1 dafür offenbarten Polymere auf Seite 14, Zeile 26 bis Seite 15, Zeile 12 in Frage.

Bevorzugt ist eine fünflagige Folie mit dem Schichtaufbau Polyethylen/ Haftschicht/ Aluminium/ Haftschicht/ Polyethylen.

Ebenfalls möglich ist die Verwendung mehrer gleicher oder verschiedener Barriereschichten in einer Laminatfolie. So kann beispielsweise ein oder mehrere Lagen Aluminium und eine oder mehrere Lagen Ethylen-Vinylalkohol-Polymer oder Kombinationen der aus Aluminium und Ethylen-Vinylalkohol-Polymer verwendet werden. Bei zwei Barriereschichten ergibt sich dann typischerweise eine wenigstens siebenlagige Folie aus Außenschicht, Haftschicht, erster Barriereschicht, Haftschicht, zweiter Barriereschicht, Haftschicht und Innenschicht.

Besonders bevorzugt ist die Verwendung von Mehrschichtfolien als Endlosschlauch wie in WO 2010052088 A1 auf Seite 18, Zeile 23, bis Seit 19, Zeile 3 beschrieben.

Ein weiterer Aspekt der vorliegenden Erfindung ist die Verwendung von oxidationsempfindlichem, peroxidarmem Polymer in kosmetischen oder pharmazeutischen Zubereitungen, Zubereitungen im Bereich der Landwirtschaft, der Getränke, der Nahrungsmittel, der Tiernahrungsmittel, der Nahrungsmittelergänzung oder der Tiernahrungsmittelergänzung sowie für medizintechnische Anwendungen. Das Polymer kann dabei als Wirkstoff oder Hilfsstoff verwendet werden. Allergische Reaktionen oder sonstige Unverträglichkeiten, wie sie durch Schwermetalle oder Enzyme oder Schwefelverbindungen auftreten können, werden dabei vermieden.

Ebenso vorteilhaft erweist sich das erfindungsgemäße Polymer für den Einsatz in der Technik, etwa der Medizintechnik wie Dialysemembranen oder sonstigen Substanzen, Vorrichtungen oder Apparaten, die mit dem Körper oder Körperflüssigkeiten in Berührung kommen oder in den Körper gelangen oder eingebracht werden. Vorteilhaft ist ebenso der Einsatz in Anwendungen, die kritisch sind bezüglich Farbe und/oder Geruch, wie Haarkosmetik, Gele, Displays, Photoresists, Klebstoffe oder Oberflächenbeschichtung, etwa für Papier und durchsichtige Kunststoffe.

Weitere mögliche Anwendungen sind als Hilfsmittel oder Wirkstoff im Bereich Wasch- und Reinigungsmittel oder technischen Anwendungen wie Membrane, Gashydratinhibitoren, Keramik, Photoresists, Gelen, Lacken, Filmüberzügen, Displays, Metallbearbeitung und -herstellung.

Bevorzugt ist die Verwendung in kosmetischen oder pharmazeutischen Zubereitungen, Zubereitungen im Bereich der Landwirtschaft, der Getränke, der Nahrungsmittel, der Tiernahrungsmittel, der Nahrungsmittelergänzung oder der Tiernahrungsmittelergänzung sowie für medizintechnische Anwendungen.

Besonder bevorzugt ist die Verwendung in kosmetischen oder pharmazeutischen Zubereitungen. Insbesondere gefunden wurde die Verwendung in pharmazeutischen Zubereitungen.

Besonders geeignet ist oxidationsempfindliches, peroxidarmes Vinyllactam-Polymer für pharmazeutische Formulierungen wie feste Dosierformen.

Für eine solche Verwendung in pharmazeutischen Formulierungen bevorzugtes Vinyllactam-Polymer ist wasserlösliches und wasserunlöslich-vernetztes Vinylpyrrolidon-Polymer wie Polyvinylpyrrolidon und PVPP sowie wasserlösliches Vinylpyrrolidon-Vinylacetat-Polymer. Ganz besonders bevorzugt sind Polyvinylpyrrolidon-Polymere. Insbesondere bevorzugt ist wasserunlöslich vernetztes Polyvinylpyrrolidon-Popcornpolymer.

Solche Formulierungen enthalten neben erfindungsgemäßem Polymer und gegebenenfalls Wirkstoff üblicherweise noch weitere dem Fachmann bekannte und übliche Hilfsstoffe wie Bindemittel, Zerfallsförderer, Tablettensprengmittel, Tenside, Geschmacksmaskierer, Gleitmittel, Filmüberzüge, Füllstoffe und/oder Süßstoffe. All diese Substanzen sind prinzipiell geeignet zur gemeinsamen Verwendung mit dem erfindungsgemäßen Polymer.

Als Wirkstoffe sind prinzipiell alle bekannten Wirkstoffe geeignet. Mögliche Wirkstoffe sind beispielsweise in US 2008-0181962 offenbart im Paragraph [0071], ab siebtletzter Zeile bis Ende dieses Paragraphs, auf die hier ausdrücklich Bezug genommen wird.

Prinzipiell sind alle Anwendungsgebiete möglich, beispielsweise die in US 2001-0010825 auf Seite 1, Paragraph [0029], letzte Zeile, bis Paragraph [0074] Ende, genannten sowie die dort genannten exemplarischen Beispiele für Wirkstoffe, auf die hier jeweils ebenfalls ausdrücklich Bezug genommen wird.

Angesichts des Stands der Technik war es vollkommen überraschend, dass die Verwendung von Phosphorverbindung in so geringen Mengen die Herstellung, Verpackung und Lagerung in abgeschlossenen, Schutzgas-gefüllten Verpackungsformen und damit die Bereitstellung eines solchen stabilisierten, peroxidarmen Polymers für den Anwender ermöglicht, das auch nach langem Lagern und selbst bei kurzzeitiger Handhabung an Luft praktisch keinerlei messbare oder nur sehr geringe Peroxidgehalte aufweist.

Bekannte Polymere zeigen dagegen einen deutlichen Peroxidgehalt bereits in der ungeöffneten Originalverpackung, der mit weiterem Lagern und insbesondere bei Luftkontak drastisch und schnell ansteigt.

Gemäß dieser Erfindung wurde demnach eine sehr deutliche und insbesondere über einen längeren Zeitraum der Lagerung - sowohl in der geschlossenen Original-Verpackungsform unter Schutzgasatmosphäre sowie auch kurzzeitig an Luft - eine stabile Reduzierung der Peroxidgehalte beobachtet: Es wurde also keine oder nur eine marginale Erhöhung der Peroxidgehalte (im Vergleich zu nicht-erfindungsgemäßen Polymeren) beobachtet ausgehend vom ursprünglichen, bereits sehr niedrigen Peroxidgehalt der erfindungsgemäßen Polymere, der nach Herstellung bestimmt wurde.

Überraschenderweise weist ein nach dem erfindungsgemäßen Verfahren erhältliches oxidationsempfindliches, peroxidarmes Polymer auch eine deutlich messbare, allerdings zeitlich begrenzte Stabilisierung gegen den Anstieg des Peroxidgehaltes bei Lagerung auf, auch wenn die Verpackungsmaterialien stärker sauerstoffdurchlässig sind, wenn die Verpackung nicht vollständig gegenüber Sauerstoffzutritt dicht ist - etwa bei Beschädigungen der Verpackung - und/oder das Polymer sich in einer Atmosphäre mit höherem Sauerstoffgehalt von mehr als 2 Vol% bis hin zu normaler Luft und deren bekanntem Sauerstoffgehalt befindet.

Das Ergebnis der Anwendung des erfindungsgemäßen Verfahrens zur Stabilisierung mit der Verpackung des Polymers in den abgeschlossenen, Schutzgas-gefüllten Verpackungsformen kann noch weiter verbessert werden: So sinkt bei Durchführen von Verfahrensschritten vor der Abfüllung unter einer Schutzgasatmosphäre, insbesondere bei Durchführung der Trocknung unter Schutzgas, der nach Herstellung messbare Peroxidgehalt gegenüber der Herstellung und Handhabung, insbesondere der Trocknung ohne Schutzgas oder mit höheren Sauerstoffgehalten noch weiter ab und bleibt auch beim Lagern auf einem wesentlich niedrigeren Niveau, zeigt also keinen oder nur einen sehr verlangsamten Anstieg der Peroxidwerte.

Durch die vorliegende Erfindung wird daher insbesondere der Peroxidgehalt im Polymer minimiert sowie auch die Stabilität bei Temperaturbelastung sowie die Stabilität in sauerstoffhaltigem Medium verbessert.

Insbesondere überraschend war dieser Langzeiteffekt auch ohne Verwendung von Antioxidanz: Antioxidanzen werden vom Fachmann üblicherweise als Schutz vor Oxidation über einen längeren Zeitraum zu den zu schützenden Polymeren zugesetzt. Der Effekt aus der alleinigen Verwendung einer anorganischen Phosphorverbindung, die wie dem Fachmann bekannt keine antioxidative Wirkung aufweist, noch dazu in solch geringen Mengen wie in der vorliegenden Erfindung, war daher vollkommen unerwartet.

Ein Vorteil des erfindungsgemäßen peroxidarmen Polymers ist seine Stabilität, das heißt, dass sich die Eigenschaften wie Peroxidgehalt, Molmasse, Farbe und/oder Geruch, die es unmittelbar nach der Herstellung aufweist, im Lauf der Zeit kaum oder gar nicht verändern. Als Maß für die Qualität des Polymeren dient insbesondere die Bestimmung des Peroxidgehaltes. Ferner herangezogen werden können Geruch und/oder Farbe sowie - bei wasserlöslich vernetzten Polymeren - auch Molmasse, K-Wert und Viskosität von Lösungen.

Der Peroxidgehalt im Polymer, insbesondere Vinyllactam-Polymer, wird dabei bestimmt mittels Iodometrie, mittels Titanylsulfat-Reagenz oder mittels Cer-Reagenz. Die Methoden sind dem Fachmann bekannt, beispielsweise aus der Ph.Eur.7. Alle Methoden liefern prinzipiell vergleichbare Ergebnisse.

Erfindungsgemäßes oxidationsempfindliches, peroxidarmes Polymer, insbesondere Vinyllactam-Polymer wie Polyvinylpyrrolidon-Polymere, nach dem erfindungsgemäßen Verfahren weist dabei jeweils bezogen auf den Polymerfestgehalt einen Peroxid-Gehalt ermittelt nach Herstellung von nicht mehr als 20 ppm, bevorzugt nicht mehr als 10 ppm und besonders bevorzugt von nicht mehr als 5 ppm auf, und/oder einen Peroxid-Gehalt ermittelt zu einem beliebigen Zeitpunkt innerhalb von bis zu drei Monaten nach Herstellung von nicht mehr als 50 ppm, bevorzugt nicht mehr als 30 ppm, besonders bevorzugt nicht mehr als 10 ppm und ganz besonders bevorzugt nicht mehr als 5 ppm wie beispielsweise nicht mehr als 1 ppm auf, wobei der Peroxidgehalt ermittelt wird nach der Titanylsulfat-Methode gemäß europäischer Pharmacopöe Ausgabe 7. Insbesondere weist ein solches erfindungsgemäßes Polymer Restmonomergehalte - bezogen auf den Polymerfestgehalt - je eingesetztem Monomer von nicht mehr als 100 ppm, bevorzugt nicht mehr als 50 ppm, besonders bevorzugt nicht mehr als 20 ppm, ganz besonders bevorzugt nicht mehr als 10 ppm und insbesondere nicht mehr als 5 ppm wie beispielsweise weniger als 1 ppm, auf.

Der K-Wert (Fikentscher K-Wert; siehe etwa Bühler, "Polyvinylpyrrolidone - Excipient for Pharmaceuticals", Springer, 2005, Seite 40 bis 41) ist ein Maß für die Lösungsviskosität bei definierten Bedingungen. Damit ist er ein direktes Maß für die Molmasse. Verändert sich die Molmasse beispielsweise durch oxidative Prozesse, führt dies zu Molmassenaufbau (führt zur K-Wert-Erhöhung) oder zu Molmassenabbau (führt zur K-Wert-Erniedrigung) und so zu einer Veränderung des K-Werts.

Der Aufbau und Zerfall von Peroxiden im Polymer ist ein solcher oxidativer Prozess.

Damit weist erfindungsgemäßes Polymer sowie Polymer erhältlich nach dem erfindungsgemäßen Verfahren auch eine Stabilität des K-Wertes und damit der Molmasse beim Lagern auf. Da die Molmasse und damit der K-Wert direkt mit der Lösungsviskosität verknüpft sind, verändert sich folglich auch die Lösungsviskosität nicht oder nur sehr viel geringer als ohne das erfindungsgemäße Verfahren.

Erfindungsgemäßes Polymer sowie Polymer erhältlich nach dem erfindungsgemäßen Verfahren zeigt nach Lagerung bei Raumtemperatur eine K-Wert-Veränderung, bestimmt zu einem, beliebigen Zeitpunkt innerhalb von 3 Monaten nach Herstellung, von üblicherweise weniger als 10%, bevorzugt weniger als 5%, besonders bevorzugt weniger als 2% und ganz besonders bevorzugt weniger als 1 % bezogen auf den Ausgangs-K-Wert des Polymers, wobei der Ausgangs-K-Wert nach Herstellung des Polymers nach Fikentscher bestimmt wird.

Für unlöslich vernetztes Polymer kann - wie dem Fachmann bekannt - ein solcher K-Wert nicht bestimmt werden und wird daher auch nicht angegeben.

Die Farbe des Polymers ist je nach Anwendung wichtig und soll üblicherweise so gering wie möglich sein, bevorzugt vollständig farblos. Die Farbe kann beispielsweise mittels spektroskopischer Methoden bestimmt und etwa als Hazen-Farbzahl oder lod-Farbzahl oder als Farbklassifikation nach dem Deutschen Arzneibuch angegeben werden. Diese Bestimmungen sind dem Fachmann geläufig.

Durch die oxidativen Prozesse beim Aufbau und Zerfall von Peroxiden im Polymer entstehen auch farbgebende Komponenten, die die Farbe des Polymeren verändern, üblicherweise verschlechtern, d.h. je nach Farbskala üblicherweise deutlich höhere Farbwerte aufweisen als zuvor.

Durch das erfindungsgemäße Verfahren wird der Peroxidaufbau drastisch vermindert oder gar verhindert und somit auch der Zerfall. Dadurch werden Veränderungen in der Farbe des Polymeren verringert oder gar komplett unterbunden.

Damit erreicht erfindungsgemäßes Polymer, insbesondere Vinyllactam-Polymer, sowie Polymer erhältlich nach dem erfindungsgemäßen Verfahren auch eine Stabilität der Farbe des Polymeren beim Lagern.

Erfindungsgemäßes Polymer, insbesondere Vinyllactam-Polymer, sowie Polymer erhältlich nach dem erfindungsgemäßen Verfahren zeigt daher nach Lagerung bei Raumtemperatur eine Farbzahlerhöhung bei der Hazen-Farbe (auch "Hazen-Farbzahl" oder "Kobalt-Platin-Farbzahl" genannt), bestimmt zu einem beliebigen Zeitpunkt innerhalb von 3 Monaten nach Herstellung, von üblicherweise weniger als 10%, bevorzugt weniger als 5%, besonders bevorzugt weniger als 3% und ganz besonders bevorzugt von 1 % oder weniger bezogen auf den Ausgangs-Farb-Wert, der nach Herstellung bestimmt wird.

Die Farbe nach Hazen ist nur für lösliche Polymere und hier insbesondere für kosmetische Anwendungen wichtig.

Im Pharmabereich wird dagegen die Farbe gemäß den Vorgaben der Arzneibücher und Monografien bestimmt. Die erreichbare Farbe der erfindungsgemäßen Polymere entspricht dabei den Vorgaben aller relevanten Vorschriften in Japan, USA und Europa in der aktuellsten Version von 2010 und kann die Anforderungen sogar deutlich übertreffen, das heißt, eine geringere Farbe als gefordert aufweisen. Dem Fachmann sind diese Anforderungen und die zugehörigen Messmethoden hinlänglich bekannt.

Erfindungsgemäßes Polymer, insbesondere Vinyllactam-Polymer, sowie Polymer erhältlich nach dem erfindungsgemäßen Verfahren zeigt daher nach Lagerung bei Raumtemperatur eine Farbzahlerhöhung bei der Farbe gemäß Ph.Eur. 7 bestimmt zu einem beliebigen Zeitpunkt innerhalb von 3 Monaten nach Herstellung, von üblicherweise weniger als 3 Skalenwerte, bevorzugt weniger als 2 Skalenwerte, besonders bevorzugt weniger als 1 Skalenwert und ganz besonders bevorzugt keine Abweichung bezogen auf den Ausgangs-Farb-Wert, der nach Herstellung bestimmt wird.

Der Geruch des Polymers ist je nach Anwendung ebenfalls wichtig. Das Polymer soll keinen schlechten Geruch aufweisen. Ebenso soll kein schlechter Geruch beim Lagern entstehen. Der Geruchs des Polymeren kann beispielsweise durch Headspace-GC-Methoden anhand von Geruchsprofilen oder olfaktorisch bestimmt werden, etwa mit der menschlichen Nase (etwa von dafür ausgebildeten Personen, wie Parfumeuren). Durch oxidative Prozesse im Rahmen des Peroxidaufbaus und -zerfalls entstehen neben farbgebenden auch geruchsbildende Substanzen, die etwa zu einem "muffigen" Geruch führen.

Erfindungsgemäßes Polymer, insbesondere Vinyllactam-Polymer, sowie Polymer erhältlich nach dem erfindungsgemäßen Verfahren zeigt nur eine sehr verringerte oder praktisch keine Veränderung zu unerwünschten Gerüchen, bestimmt zu einem beliebigen Zeitpunkt innerhalb von 3 Monaten nach Herstellung.

Die folgenden Beispiele zeigen exemplarisch und nicht begrenzend die Erfindung.

### Beispiele

Die Bestimmung des Peroxid-Gehalts erfolgte bei allen Proben durch die Titanylsulfat-Methode gemäß europäischer Pharmacopöe Ausgabe 7 (Ph.Eur. 7). Die Zahlenangaben beziehen sich auf die ppm-Werte (1 ppm entspricht 1 mg Peroxid/ kg Polymer), berechnet und angegeben als Wasserstoffperoxid-Äquivalent.

Der Gehalt an Phosphor, Natrium und Kalium im Polymer wurde quantitativ bestimmt mittels ICP-MS-Methode (Massenspektroskopie mittels induktiv-gekoppeltem Plasma). Phosphinat, Phosphonat und Phosphat wurde über Ionenchromatographie quantitativ bestimmt.

Prozentangaben bedeuten Gewichtsprozent. Angaben in "ppm" beziehen sich auf das Gewicht (1 ppm = 1 mg/kg). Angaben in Gewichtsprozent und ppm beziehen sich jeweils auf festes Polymer (den Polymerfestgehalt), das heißt die Menge an Polymer, die in einer Lösung oder Dispersion oder Suspension vorhanden ist.

Bei allen Beispielen erfolgte die Zugabe von Phosphorverbindung unter Stickstoff (verwendet wurde Stickstoff der Reinheit 99,9 Vol%). Die weitere Aufarbeitung wie Trocknung sowie die Lagerung erfolgte ebenfalls unter Stickstoff derselben Reinheit beziehungsweise wo angegeben unter Luft.

Verwendete Phosphorverbindungen:
Eingesetzt wurden die Natrium- und Kaliumsalze der Phosphonsäure (Natrium- bzw. Kalium-Phosphonate; veralte Bezeichnung: Phosphite), der Diphosphonsäure (Natriumdiphosphonat) sowie der Phosphinsäure (Natrium- und Kaliumphosphinat).

Alle verwendeten Folien erfüllen die derzeit gültigen Vorschriften der deutschen, europäischen und US-amerikanischen Behörden und Institutionen zur Verpackung von Pharmazeutischen Produkten, Nahrungsmitteln etc, wie die europäische Pharmacopöe, die Regeln der US-amerikanischen FDA oder den deutschen Richtlinien zu Verpackungen.

Verwendete Verpackungsformen:
Erfindungsgemäße Verpackungsformen/Folien: 1, 2, 3
Vergleichs-Verpackungsformen/Folien: 4, 5, 6

Verpackungsform 1 (Folie 1), Verpackungsform 2 (Folie 2):
Coextrudierte Folien in Form eines flexiblen, nicht-selbsttragenden Foliensackes Barriereschicht: EVOH-Polymer, Dicke 15 µm (+-3µm Toleranz)
Haftkleber: Maleinsäureanhydrid-modifiziertes Polyethylen, Adoma SF 700, Mitsui Petrochemical Industries
EVOH: EVAL™ F (der Firma Kuraray, Japan)
Polyethylen: LDPE
Die an der Außenseite antistatisch ausgerüsteten Foliensäcke wiesen die Form von Seitenfaltensäcken auf. Die Schlauchhülle war am Boden geschweißt (im Bereich von 10 bis 20 mm oberhalb der unteren Schlauchkante).
Gesamttoleranz der Foliendicke: +-8% (nach DIN 53.370)

Verpackungsform 1:
Schichtdicke: 150 µm Dicke
Schichtaufbau: Polyethylen/Haftschicht/EVOH/Haftschicht/Polyethylen
Schichtdicken[µm]: 50/16,5/15/16,5/50 (Produktseite)
Dimension: 950mm lang, 390mm breit, 300 mm breite Falte, Seitenfaltensack

Verpackungsform 2:
Schichtdicke: 300 µm Dicke
Schichtaufbau: Polyethylen/Haftschicht/EVOH/Haftschicht/Polyethylen
Schichtdicken [µm]: 145/10/15/10/120 (Produktseite)
Dimension: 950mm lang, 390mm breit, 300 mm breite Falte, Seitenfaltensack

Verpackungsform 3 (Folie 3),
Laminierte Folie in Form eines flexiblen, nicht-selbsttragenden Foliensackes
Barriereschicht: Aluminium, Dicke 15 µm (+-2 µm Toleranz)
Haftkleber: Oberflächen-modifiziertes Polyethylen, Mitsui Petrochemical Industries Polyethylen: LDPE
Die an der Außenseite antistatisch ausgerüsteten Foliensäcke wiesen die Form von Seitenfaltensäcken auf. Die Schlauchhülle war am Boden geschweißt (im Bereich von 10 bis 20 mm oberhalb der unteren Schlauchkante).
Gesamttoleranz der Foliendicke: +-8% (nach DIN 53.370)

Verpackungsform 3:
Schichtdicke: 200 µm Dicke
Schichtaufbau: Polyethylen/Haftschicht/Aluminium/Haftschicht/Polyethylen
Schichtdicken[µm]: 100/10/15/10/65 (Produktseite)
Dimension: 950mm lang, 390mm breit, 300 mm breite Falte, Seitenfaltensack

Verpackungsformen 4 und 5; Aluminium-PE-Laminat-Folien
Gemeinsames Aufbau-Prinzip:
Die laminierte Schicht (äußere Hülle) bestand aus Aluminium/ Haftschicht/Polyester/ Haftschicht/PE. Die folgende innere, produktberührende Schicht PE war ein nicht-laminierter Film (innere Hülle). Diese innere Hülle wurde in die äußere Hülle eingelegt; beide Hüllen wurden am unteren Ende gemeinsam abgeschweißt (im Bereich von 10 bis 20 mm oberhalb der unteren Schlauchkante). Am oberen Ende der Schlauchkante wurden die beiden Hüllen durch 10 in gleichmäßigem Abstand verteilte, in Richtung von der unteren zur oberen Schlauchkante ausgeführte, 10 bis 15 cm lange Streifen eines Klebstoffs aneinander befestigt. Die feste Verbindung beider Folien am oberen Schlauchende erfolgte nach dem Abfüllen des Produktes durch das Verschweißen des Sacks am oberen Schlauchende.
Die Foliensäcke wiesen die Form von sogenannten Seitenfaltensäcken auf.

Verpackungsform 4: (Folie 4)
Schichtdicke: 0,224 mm
Barriereschicht: Aluminium
Äußere Hülle (äußere Folie): Schichtaufbau: Aluminium/ Haftschicht/Polyester/ Haftschicht/PE Schichtdicken [µm]: 12/20/12/20/80
Innere Hülle (innere Folie): Polyethylen: LDPE 80 µm (Produktseite)
Haftschicht: natürliche Basis
Dimension: 950mm lang, 390mm breit, 300mm breite Falte, Seitenfaltensack

Verpackungsform 5: (Folie 5)
Schichtdicke: 0,264 mm
Barriereschicht: Aluminium
Äußere Hülle (äußere Folie): Schichtaufbau: Aluminium/ Haftschicht/Polyester/ Haftschicht/PE Schichtdicken [µm]: 12/20/12/20/100
Innere Hülle (innere Folie): Polyethylen: LDPE 100 µm (Produktseite)
Haftschicht: natürliche Basis
Dimension: 950mm lang, 385mm breit, 300mm breite Falte, Seitenfaltensack

Verpackungsform 6: (Folie 6)
Polyethylen-Folie, Dicke 0,15 mm
Barriereschicht: ohne
Schichtaufbau: Polyethylen
Schichtdicke [µm]: 150
Polyethylen: HDPE
Dimension: 1000mm lang, 380mm breit, 300mm breite Falte, Seitenfaltensack
Erfindungsgemäße Beispiele:
Beispiel 1): Polyvinylpyrrolidon, K-Wert 30, festes Pulver;
   128,387 mg Natriumphosphonat (0,001235 mol Phosphor) pro kg Polymer
Beispiel 2): Polyvinylpyrrolidon, K-Wert 25, festes Pulver;
   207,588 mg Kaliumphosphonat (0,001729 mol Phosphor) pro kg Polymer
Beispiel 3): Polyvinylpyrrolidon, K-Wert 90, festes Pulver;
   468,630 mg Natriumdiphosphonat (0,002985 mol Phosphor) pro kg Polymer
Beispiel 4): Polyvinylpyrrolidon (wasserunlöslich quervernetzt; "PVPP", hergestellt aus
   1,99 Gew.% Vernetzer Divinylethylenharnstoff und Vinylpyrrolidon), festes Pulver; 172,048 mg Natriumphosphinat (0,002264 mol Phosphor) pro kg Polymer
Beispiel 5): Poly(vinylpyrrolidon-co-vinylacetat), K-Wert 38,
   Gewichtsverhältnis Vinylpyrrolidon zu Vinylacetat = 60:40; festes Pulver; 64,193 mg Natriumphosphonat (0,0006174 mol Phosphor) pro kg Polymer 69,506 mg Kaliumphosphinat (0,0007546 mol Phosphor) pro kg Polymer Gesamtphosphorgehalt: 0,001372 mol Phosphor pro kg Polymer

Die Polymere der Beispiele 1 bis 5 wurden nach bekannten Verfahren polymerisiert (Bsp 1 und 2: Wasserstoffperoxid als Initiator, Wasser als Lösemittel, Festgehalte 40 bzw. 45 Gew.%; Bsp 3: Wako V59 als Initiator, Wasser als Lösemittel, Festgehalt 23 Gew.%; Bsp 5: Ditert.butylperpivalat als Initiator, Isopropanol/Wasser 90:10 als Lösemittel; Bsp 4: hergestellt mittels Popcornpolymerisation in Wasser aus 2 Gew.% Divinylharnstoff als Vernetzer und 98 Gew.% N-Vinylpyrrolidon) und während aller Prozessschritte von der Polymerisation über die Waschung (nur Beispiel 4) und Trocknung bis zum Verschließen der mit Polymer gefüllten Verpackungsform unter einer Stickstoffschutzgasatmosphäre mit einem Sauerstoffgehalt von weniger als 1 Vol% gehalten.

Den Polymeren wurde nach Ende der Nachpolymerisation (Bsp. 2, 3 und 5) bzw. nach der Nachpolymerisation anschließenden sauren Hydrolyse mit Ameisensäure (Bsp. 1) mit der angegebenen Menge der jeweiligen Phosphorverbindung(en) versetzt und für jeweils 45 Minuten gerührt (Polymeransatzgrößen: 8 Kubikmeter Reaktorvolumen).

Bei Beispiel 4 wurde die Phosphorverbindung in einer Menge von 300 mg nach der Nachpolymerisation zugesetzt und für 35 Minuten gerührt (Polymeransatzgröße: 5 Kubikmeter Reaktorvolumen), anschließend filtriert, zweimal mit Phosphorverbindungs-haltigem Wasser (500 mg pro Liter Waschlösung) nachgewaschen und jeweils filtriert und danach das Polymer abgepresst. Die Menge an Phosphorverbindung wurde dann im feuchten Polymer unmittelbar vor der Trocknung und nochmals nach der Trocknung bestimmt.

Alle Verpackungsformen 1 bis 5 wurden in einen Papierkarton als Umverpackung, Verpackungsform 6 in ein HD-PE-Fass mit gedichtetem Deckel (Elastomerdichtung im Innenrand) eingebracht, befüllt, evakuiert und danach mit Stickstoff (99,8 Vol% Reinheit für die Beispiele 1 bis 5, 99 Vol% Reinheit für die Vergleichsbeispiele) begast, verschweißt und anschließend im Karton bzw. dem mit dem Deckel verschlossenen Fass bei den angegebenen Lagerbedingungen für die angegebene Dauer gelagert.

Es wurden dabei so viele Gebinde eingelagert, wie Messzeitpunkte vorgesehen waren: Zu jedem Messzeitpunkt wurde dann ein seit der Abfüllung bis zur Messung niemals geöffnetes Gebinde verwendet, um eine Kontamination oder Verfälschung durch Öffnen und Wiederverschließen zu vermeiden.

Erreichte Gasgehalte in der Verpackung nach Herstellung der Beispiele 1 bis 5: Stickstoff 99,7 Vol.%, Sauerstoff kleiner als 0,03 Vol.%

Die Lagerung erfolgte bei 30 °C und 70 % relativer Feuchte und bei 45 °C und 75 % relativer Feuchte. Als Vergleich wurden Proben in Aluminium-PE-Foliensäcken auch bei 5°C gelagert.

Es wurde der Initialwert an Peroxiden nach der Abfüllung und nach Lagerung nach der jeweils angegebenen Anzahl von Monaten bestimmt. Die Bestimmung des Peroxidgehalts erfolgte durch UV-photometrische Bestimmung gemäß der der Titanylsulfat-Methode gemäß europäischer Pharmacopöe Ausgabe 7.

In den nachstehenden Tabellen sind die Ergebnisse im Einzelnen aufgeführt.
Verwendete Abkürzungen:
n.b. = nicht bestimmt
%.r.F. = Prozent relative Feuchtigkeit

**Tabelle 1: Erfindungsgemäße Beispiele 1 bis 5 - Ergebnisse**

| Beispiel Nr. | Verpackungsform | Luftfeuchtigkeit [%.r.F.] | Temp [°C] | Lagerdauer [Monate]: Peroxide in ppm | | | | | | |
|---|---|---|---|---|---|---|---|---|---|---|
| | | | | 0 | 1 | 3 | 6 | 9 | 12 | 18 |
| 1 a | 1 | 70 | 30 | <10 | <10 | <10 | <10 | <10 | n.b. | n.b. |
| 1 b | 2 | 70 | 30 | <10 | <10 | <10 | n.b. | <10 | <10 | n.b. |
| 1 c | 3 | 70 | 30 | <10 | <10 | <10 | n.b. | <10 | n.b. | <10 |
| 1 d | 1 | 75 | 45 | <10 | <10 | <10 | <10 | 23 | n.b. | n.b. |
| 1 e | 2 | 75 | 45 | <10 | <10 | <10 | n.b. | 20 | 34 | n.b. |
| 1 f | 3 | 75 | 45 | <10 | <10 | <10 | n.b. | 17 | n.b. | n.b. |
| 2 a | 1 | 75 | 45 | <10 | <10 | <10 | <10 | 20 | n.b. | 32 |
| 2 b | 2 | 70 | 30 | <10 | <10 | <10 | n.b. | <10 | 21 | n.b. |
| 2 c | 3 | 70 | 30 | <10 | <10 | <10 | n.b. | 19 | n.b. | n.b. |
| 3 a | 1 | 75 | 45 | <10 | <10 | <10 | 14 | 11 | n.b. | 19 |
| 3 b | 2 | 70 | 30 | <10 | <10 | <10 | n.b. | 13 | 21 | n.b. |
| 3 c | 3 | 75 | 45 | <10 | <10 | <10 | n.b. | 18 | n.b. | 35 |
| 4 a | 1 | 70 | 30 | <10 | <10 | <10 | <10 | <10 | n.b. | <10 |
| 4 b | 2 | 70 | 30 | <10 | <10 | <10 | n.b. | <10 | <10 | n.b. |
| 4 c | 3 | 75 | 45 | <10 | <10 | <10 | n.b. | 17 | n.b. | 22 |
| 5 a | 1 | 70 | 30 | <10 | <10 | <10 | <10 | <10 | n.b. | <10 |
| 5 b | 2 | 75 | 45 | <10 | <10 | <10 | n.b. | <10 | <10 | n.b. |
| 5 c | 3 | 75 | 45 | <10 | <10 | <10 | n.b. | <10 | n.b. | <10 |

Beispiel 3): Polyvinylpyrrolidon, K-Wert 90, festes Pulver
Verpackungsform 2 (Beispiel 3b) und 3 (Beispiel 3c)

| Beispiel Nr. | Lagerdauer [Monate] bei 30 °C, 70 % r.F.; K-Werte [ohne Einheit] | | | | | |
|---|---|---|---|---|---|---|
| Monate | 0 | 3 | 6 | 9 | 12 | 18 |
| 3b | 91,9 | 91,3 | n.b. | 91,5 | 91,0 | n.b. |

| | Lagerdauer [Monate] bei 45 °C, 75 % r.F.; K-Werte [ohne Einheit] | | | | | |
|---|---|---|---|---|---|---|
| Monate | 0 | 1 | 3 | 6 | 9 | 12 |
| 3c | 91,9 | 92,2 | 91,8 | n.b. | 92,0 | n.b. |

### Analytik anhand Beispiel 4:

Bestimmung der Gehalte 2 Monate nach Herstellung ergaben diese Werte:
Phosphorgehalt: 0,00224 mg pro kg Polymer, Natriumgehalt: 0,0902 mg pro kg Polymer Phosphinat und Phosphat konnten quantitativ nachgewiesen werden. Phosphonat war aufgrund der geringen Menge nur qualitativ nachweisbar.
Wiederfindung Phosphor: 100% im Rahmen der Messgenauigkeit

### Vergleichsbeispiele

Vergleichsbeispiele finden sich in WO 2010052088 A1. Alle dort offenbarten Beispiele zeigen die Verwendung von Mehrschichtfolien für die Verpackung von Polymeren, ohne jedoch Phosphorverbindungen den Polymeren zuzusetzen, bei ansonsten gleichen Mehrschichtfolien, gleichen Verpackungsformen aus diesen Mehrschichtfolien und gleichem Verfahren zur Verpackung. Einziger Unterschied zu den erfindungsgemäßen Ausführungsformen der vorliegenden Erfindung ist die Verwendung von Phosphorverbindungen sowie die strikte Handhabung unter Sauerstoffausschluss.

Keines der in WO 2010052088 A1 offenbarten Beispiele, weder erfindungsgemäße noch Vergleichsbeispiele, zeigt Polymere mit Peroxidgehalten, die in einem Zeitraum von bis zu 6 Monaten nach Herstellung dauerhaft niedriger sind als 20 ppm.

Die Folien und Verpackungsformen aus diesen Folien finden in der vorliegenden Anmeldung und der WO 2010052088 A1 die folgenden Entsprechungen:

| WO 2010052088 A1 | vorliegende Anmeldung: |
|---|---|
| Folie 1/Verpackungsform 1 | Folie 1/Verpackungsform 1 |
| Folie 2/Verpackungsform 2 | Folie 2/Verpackungsform 2 |
| - Keine Entsprechung - | Folie 3/Verpackungsform 3 |
| Folie 3/Verpackungsform 3 | Folie 4/Verpackungsform 4 |
| Folie 4/Verpackungsform 4 | Folie 5/Verpackungsform 5 |
| Folie 5/Verpackungsform 5 | Folie 6/Verpackungsform 6 |

Exemplarisch sind hier einzelne Beispiele aus der WO 2010052088 A1 nochmals wiedergegeben als Vergleichsbeispiele für die vorliegende Erfindung. Die in der ersten Spalte der Tabellen angegebene Beispielsnummer entspricht der Nummer in der WO 2010052088 A1:

Vergleichsbeispiel 1)
(entspricht Beispiel 1 aus WO 2010052088): Polyvinylpyrrolidon, K-Wert 30, festes Pulver; Verpackungsform 2

| (Vergleichs-)Beispiel Nr. | Lagerdauer [Monate] bei 30°C/70%r.F. | | | | | |
|---|---|---|---|---|---|---|
| Monate | 0 | 1 | 3 | 6 | 9 | 12 |
| 1 | 24 | | 54 | 40 | 39 | 31 |
| 2 | 37 | | 44 | 18 | 31 | 35 |
| 3 | 33 | | 80 | 29 | 38 | 39 |

| | Lagerdauer [Monate] bei 45°C/75%r.h. | | | | | |
|---|---|---|---|---|---|---|
| Monate | 0 | 1 | 3 | 6 | 9 | 12 |
| 4 | 24 | 63 | 37 | 23 | 25 | 20 |
| 5 | 37 | 55 | 33 | 21 | 20 | 16 |
| 6 | 33 | 37 | 40 | 43 | 22 | 20 |

Verpackungsform 6 (entspricht Verpackungsform 5 der WO 2010052088)

| Vergleichsbeispiel Nr. | Lagerdauer [Monate] bei 25 °C, 60 % r.F. Peroxidgehalte in [ppm] | | | |
|---|---|---|---|---|
| Monate | 0 | 3 | 6 | 12 |
| 17 | 42 | 202 | 214,4 | 252 |
| 18 | 94 | 259 | 290 | 255 |
| 19 | 78 | 211 | 235 | 132 |
| 20 | 67 | 164 | 196 | 241 |
| 21 | 25 | 140 | 242 | 340 |
| 22 | 43 | 126 | 222 | 265 |
| 23 | 37 | 135 | 175 | 266 |

Vergleichsbeispiel 2)
(entspricht Beispiel 2 aus WO 2010052088): Polyvinylpyrrolidon, K-Wert 25, festes Pulver; Verpackungsform 2

| (Vergleichs-) Beispiel Nr. | Lagerdauer [Monate] bei 30 °C, 70 % r.F.; Peroxidgehalte in [ppm] | | | | | |
|---|---|---|---|---|---|---|
| Monate | 0 | 3 | 6 | 9 | 12 | 18 |
| 25 | 61 | 45 | <20 | 36 | 24 | 29 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 26 | 61 | 28 | 37 | 20 | <20 | n.b. |

Verpackungsform 4 (entspricht Verpackungsform 3 der WO 2010052088)

| (Vergleichs-) Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 25 | 180 | 180 | n.b. | 190 | 166 | 227 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 26 | 180 | 170 | 170 | 170 | 239 | 140 |

Vergleichsbeispiel 3) (entspricht Beispiel 3 aus WO 2010052088):
Polyvinylpyrrolidon, K-Wert 90, festes Pulver; Verpackungsform 2

| (Vergleichs-) Beispiel Nr. | Lagerdauer [Monate] bei 30 °C, 70 % r.F.; Peroxidgehalte in [ppm] | | | | | |
|---|---|---|---|---|---|---|
| Monate | 0 | 3 | 6 | 9 | 12 | 18 |
| 27 | 69 | 74 | 53 | 54 | 47 | 42 |

| | Lagerdauer [Monate] bei 45 °C, 75 % r.F.; Peroxidgehalte in [ppm] | | | | | |
|---|---|---|---|---|---|---|
| Monate | 0 | 1 | 3 | 6 | 9 | 12 |
| 28 | 69 | 59 | 60 | 41 | 39 | 31 |
| | | | | | | |

| (Vergleichs-) Beispiel Nr. | Lagerdauer [Monate] bei 30 °C, 70 % r.F.; K-Werte [ohne Einheit] | | | | | |
|---|---|---|---|---|---|---|
| Monate | 0 | 3 | 6 | 9 | 12 | 18 |
| 27 | 91,8 | 91,0 | 92,2 | 92,4 | 92,7 | 92,4 |

| | Lagerdauer [Monate] bei 45 °C, 75 % r.F.; K-Werte [ohne Einheit] | | | | | |
|---|---|---|---|---|---|---|
| Monate | 0 | 1 | 3 | 6 | 9 | 12 |
| 28 | 91,8 | 92,0 | 91,6 | 92,1 | 92,5 | 92,1 |

Verpackungsform 5 (entspricht Verpackungsform 4 der WO 2010052088)

| (Vergleichs-) Beispiel Nr. | Lagerdauer [Monate] bei 5 °C; Peroxidgehalte in [ppm] | | | | | |
|---|---|---|---|---|---|---|
| Monate | 0 | 3 | 6 | 9 | 12 | 18 |
| 29 | 107 | 127 | 150 | 100 | 103 | 100 |

| | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 30 | 107 | 123 | 110 | 103 | 220 | 100 |

| | Lagerdauer [Monate] bei 45 °C, 75 % r.F.; Peroxidgehalte in [ppm] | | | | | |
|---|---|---|---|---|---|---|
| Monate | 0 | 2 | 3 | 6 | 9 | 12 |
| 31 | 107 | 90 | 157 | 290 | 73 | 53 |

| (Vergleichs-) Beispiel Nr. | Lagerdauer [Monate] bei 5 °C; K-Werte [ohne Einheit] | | | | | |
|---|---|---|---|---|---|---|
| Monate | 0 | 3 | 6 | 9 | 12 | 18 |
| 29 | 91,6 | 91,1 | 91,8 | 92,2 | 92,0 | 91,0 |

| | Lagerdauer [Monate] bei 25 °C, 65 % r.F.; K-Werte [ohne Einheit] | | | | | |
|---|---|---|---|---|---|---|
| Monate | 0 | 3 | 6 | 9 | 12 | 18 |
| 30 | 91,6 | 91,0 | 91,4 | 91,2 | 88,0 | 91,4 |

| | Lagerdauer [Monate] bei 45 °C, 75 % r.F.; K-Werte [ohne Einheit] | | | | | |
|---|---|---|---|---|---|---|
| Monate | 0 | 2 | 3 | 6 | 9 | 12 |
| 31 | 91,6 | 91,5 | 89,3 | 87,1 | 92,4 | 92,9 |

Vergleichsbeispiel 4)
(entspricht Beispiel 8 aus WO 2010052088):
Polyvinylpyrrolidon, wasserunlöslich quervernetzt (Popcorn-Polymer), festes Pulver Verpackungsform 1

| (Vergleichs-) Beispiel Nr. | Lagerdauer [Monate] bei 30 °C, 75 % r.F.; Peroxidgehalte in [ppm] | | | | | |
|---|---|---|---|---|---|---|
| Monate | 0 | 3 | 6 | 9 | 12 | 18 |
| 46 | 36 | 45 | 54 | 60 | 37 | <20 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 47 | 36 | 68 | 72 | 53 | 31 | <20 |

Verpackungsform 4 (entspricht Verpackungsform 3 der WO 2010052088)

| (Vergleichs-) Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 48 | 56 | 102 | 135 | 173 | 186 | 214 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 49 | 56 | 124 | 141 | 208 | 276 | 257 |

Vergleichsbeispiel 5) (entspricht Beispiel 9 aus WO 2010052088):
Poly(vinylpyrrolidon-co-vinylacetat), K-Wert 38, Gewichtsverhältnis Vinylpyrrolidon zu Vinylacetat = 60:40; Verpackungsform 2

| (Vergleichs-) Beispiel Nr. | Lagerdauer [Monate] bei 30 °C, 75 % r.F.; Peroxidgehalte in [ppm] | | | | | |
|---|---|---|---|---|---|---|
| Monate | 0 | 3 | 6 | 9 | 12 | 18 |
| 50 | 34 | 42 | 41 | 42 | 37 | <20 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 51 | 34 | 58 | 65 | 60 | 28 | <20 |

Verpackungsform 4 (entspricht Verpackungsform 3 der WO 2010052088)

| (Vergleichs-) Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 52 | 54 | 72 | 89 | 104 | 138 | 169 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 53 | 54 | 91 | 126 | 157 | 183 | 142 |

## Patentansprüche

1. Oxidationsempfindliches, peroxidarmes, in einer abgeschlossenen, Schutzgas-gefüllten Verpackungsform befindliches Polymer, enthaltend pro Kilogramm Polymerfeststoff mindestens eine anorganische Phosphorverbindung in solchen Mengen, dass der Gesamtphosphorgehalt 2*10⁻⁵ bis 0,02 mol beträgt.

2. Polymer nach Anspruch 1, wobei das Schutzgas weniger als 0,5 Vol% Sauerstoff enthält.

3. Polymer nach Anspruch 1 oder 2, wobei die anorganische Phosphorverbindung ausgewählt ist aus der Gruppe der Sauerstoffsäuren des Phosphors mit Phosphor der Oxidationsstufen +1, +2, +3, +4 oder gemischten Oxidationsstufen, und deren Salzen.

4. Polymer nach Anspruch 3, wobei die Oxidationsstufe des Phosphors +1 oder +3 beträgt.

5. Polymer nach einem der Ansprüche 3 oder 4, wobei die Phosphorverbindung ein Alkalimetallsalz ist.

6. Polymer nach einem der Ansprüche 1 bis 5, ausgewählt aus (i) Homo- und Copolymeren von N-Vinylverbindungen, wasserlöslichen und wasserunlöslich vernetzten Homo- und Copolymeren von N-Vinylpyrrolidon, N-Vinylpyrrolidon-Vinylacetat-Copolymeren, (ii) Mischungen von zwei oder mehreren dieser Polymeren oder (iii) Mischungen enthaltend eines oder mehrere dieser Polymere.

7. Polymer nach einem der Ansprüche 1 bis 6, wobei die Verpackungsform mindestens eine Barriereschicht umfasst.

8. Polymer nach Anspruch 7, wobei die Barriereschicht ausgewählt ist aus Aluminium und Polyvinylalkohol-Copolymeren aus Ethylen und Vinylalkohol.

9. Polymer nach einem der Ansprüche 1 bis 8, wobei die Verpackungsform Schichten aus Polyestern, Polyamid, Polyvinylchlorid, Zellglas oder Polyolefinen enthält.

10. Polymer nach einem der Ansprüche 1 bis 9, wobei die Verpackungsform aus einer Verbundfolie mit wenigstens drei Schichten besteht.

11. Polymer nach einem der Ansprüche 7 bis 10, wobei auf einer oder beiden Seiten von mindestens einer Barriereschicht mindestens eine wasserabweisende Schicht aufgebracht ist.

12. Verfahren zur Stabilisierung von oxidationsempfindlichem Polymer gegen Peroxidbildung, **dadurch gekennzeichnet, dass** während oder nach der Polymerisation wenigstens eine anorganische Phosphorverbindung in solchen Mengen in einer oder mehreren Portionen zugegeben wird, dass der Gesamtphosphorgehalt pro Kilogramm Polymerfestgehalt des fertigen Polymers 2*10⁻⁵ bis 0,02 mol beträgt, und das solchermaßen behandelte Polymer in eine Schutzgasgefüllte, abgeschlossene Verpackungsform gegeben wird.

13. Verfahren nach Anspruch 12, wobei das Schutzgas weniger als 0,5 Vol% Sauerstoff enthält.

14. Verfahren nach Anspruch 12 oder 13, wobei die anorganische Phosphorverbindung ausgewählt ist aus der Gruppe der Sauerstoffsäuren des Phosphors mit Phosphor der Oxidationsstufen +1, +2, +3, +4 oder gemischten Oxidationsstufen, und deren Salzen.

15. Verfahren nach einem der Ansprüche 12 bis 14, wobei das Polymer ausgewählt ist aus (i) Homo- und Copolymeren von N-Vinylverbindungen, wasserlöslichen und wasserunlöslich vernetzten Homo- und Copolymeren von N-Vinylpyrrolidon, N-Vinylpyrrolidon-Vinylacetat-Copolymeren, (ii) Mischungen von zwei oder mehreren dieser Polymeren oder (iii) Mischungen enthaltend eines oder mehrere dieser Polymere.

16. Verwendung von Polymer gemäß einem der Ansprüche 1 bis 15 in kosmetischen oder pharmazeutischen Zubereitungen, Zubereitungen von Agrowirkstoffen, Zubereitungen im Bereich Nahrungsmittel, Tiernahrungsmittel, Nahrungsmittelergänzung oder Tiernahrungsmittelergänzung sowie für medizintechnische Anwendungen.
